# EUROPEAN PATENT APPLICATION

(11) **EP 4 678 009 A1**
(43) Date of publication of application: **14.01.2026**
(21) Application number: 24187112.8
(22) Date of filing: 08.07.2024
(51) Int. Cl.: A23G 3/00, A24B 13/00, A24B 15/16, A24B 15/28

(54) **PREMIX CONTAINING GELLING AGENT FOR ORAL PRODUCT**

(71) Applicant: Nicoventures Trading Limited, London WC2R 3LA (GB)
(72) Inventor: Daniel, Michael S., North Carolina (US); Roohinejad, Shahin, North Carolina (US); Poole, Thomas H., North Carolina (US); O Neal, Travis, North Carolina (US); Kent Saxton, Robert, North Carolina (US); Zonnestein, Valerea Belinda, North Carolina (US); Greening, Joshua, North Carolina (US)
(74) Representative: Newcombe, Christopher David

(57) **Abstract**

The disclosure provides a composition configured for oral use and methods of preparing the same. The composition includes a particulate filler component and a free-flowing aggregate component. The free-flowing aggregate component includes a gelling agent such as a cellulose derivative; a flow aid; and a releasable component selected from the group consisting of flavoring agents, active ingredients, sensates, and combinations thereof. In some embodiments, the composition is enclosed within a pouch to form a pouched oral product.

## Description

### FIELD

The present disclosure relates to an oral product. In particular, the present disclosure relates to products intended for human consumption. The products are configured for oral use and deliver substances such as flavors and/or active ingredients during use.

### BACKGROUND

There are many categories of products intended for oral use and enjoyment. For example, oral tobacco products containing nicotine, which is known to have both stimulant and anxiolytic properties, have been available for many years. Conventional formats for so-called "smokeless" tobacco products include moist snuff, snus, and chewing tobacco, which are typically formed almost entirely of particulate, granular, or shredded tobacco, and which are either portioned by the user or presented to the user in individual portions, such as in single-use pouches or sachets. See for example, the types of smokeless tobacco formulations, ingredients, and processing methodologies set forth in US Pat. Nos. 6,668,839 to Williams; 6,834,654 to Williams; 6,953,040 to Atchley et al.; 7,032,601 to Atchley et al.; and 7,694,686 to Atchley et al.; 7,810,507 to Dube et al.; 7,819,124 to Strickland et al.; 7,861,728 to Holton, Jr. et al.; 7,901,512 to Quinter et al.; 8,627,828 to Strickland et al.; 11,246,334 to Atchley, each of which is incorporated herein by reference.

In addition, traditional tobacco materials and non-tobacco materials have been combined with other ingredients to form product formats distinct from traditional smokeless products, with example formats including lozenges, pastilles, gels, and the like. See, for example, the types of products described in US Patent App. Pub. Nos. 2008/0196730 to Engstrom et al.; 2008/0305216 to Crawford et al.; 2009/0293889 to Kumar et al.; 2010/0291245 to Gao et al; 2011/0139164 to Mua et al.; 2012/0037175 to Cantrell et al.; 2012/0055494 to Hunt et al.; 2012/0138073 to Cantrell et al.; 2012/0138074 to Cantrell et al.; 2013/0074855 to Holton, Jr.; 2013/0074856 to Holton, Jr.; 2013/0152953 to Mua et al.; 2013/0274296 to Jackson et al.; 2015/0068545 to Moldoveanu et al.; 2015/0101627 to Marshall et al.; and 2015/0230515 to Lampe et al., each of which is incorporated herein by reference.

There is continuing interest in the development of new types of oral products that deliver advantageous sensorial or biological activity. Such products typically contain flavorants and/or active ingredients such as nicotine, caffeine, botanicals, or cannabidiol. The format of such products can vary and include pouched products containing a powdered or granular composition, lozenges, pastilles, liquids, gels, emulsions, meltable compositions, and the like. See, for example, the types of products described in US Patent App. Pub. Nos. 2022/0160675 to Gerardi et al.; 2022/0071984 to Poole et al.; 2021/0378948 to Gerardi et al.; 2021/0330590 to Hutchens et al.; 2021/0186081 to Gerardi et al.; 2021/0177754 to Keller et al; 2021/0177043 to Gerardi et al.; 2021/0177038 to Gerardi et al.; 2021/0169867 to Holton, Jr. et al.; 2021/0169792 to Holton, Jr. et al.; 2021/0169132 to Holton, Jr. et al.; 2021/0169121 to St. Charles, and 2021/0169122 to St. Charles, each of which is incorporated herein by reference.

### BRIEF SUMMARY

The present disclosure generally provides compositions configured for oral use, products comprising such compositions, and methods of preparing the compositions. The compositions generally comprise a particulate filler component and a free-flowing aggregate component which comprises a gelling agent such as a cellulose derivative, a flow aid, and a releasable component.

Accordingly, in one aspect is provided a composition configured for oral use, the composition comprising a particulate filler component and a free-flowing aggregate component comprising: a gelling agent such as a cellulose derivative; a flow aid; and a releasable component selected from the group consisting of flavoring agents, active ingredients, sensates, and combinations thereof.

In some embodiments, the composition comprises from about 0.1 to about 3% by weight of the gelling agent (e.g., cellulose derivative), based on the total weight of the composition.

In some embodiments, the cellulose derivative is a cellulose ether. In some embodiments, cellulose ether is one or more of methylcellulose, ethylcellulose, hydroxyethyl cellulose, hydroxypropyl cellulose (HPC), hydroxypropylmethyl cellulose (HPMC), or carboxymethyl cellulose (CMC). In some embodiments, the cellulose derivative is hydroxypropyl cellulose (HPC).

In some embodiments, the composition comprises from about 0.1 to about 3% by weight of the flow aid, based on the total weight of the composition.

In some embodiments, the flow aid is selected from the group consisting of silica (silicon dioxide; SiO₂), stearic acid, stearate salts, talc, sodium stearyl fumarate, polyethylene glycol, and combinations thereof. In some embodiments, the flow aid is silica.

In some embodiments, the cellulose derivative is hydroxypropyl cellulose (HPC) and the flow aid is silica.

In some embodiments, a ratio by weight of HPC to silica is about 1:0.125 or lower. In some embodiments, a ratio by weight of HPC to silica is about 1 :0.25 or lower.

In some embodiments, the particulate filler component comprises a cellulose material, a starch, or both. In some embodiments, the particulate filler component comprises microcrystalline cellulose.

In some embodiments, the releasable component comprises a flavoring agent comprising one or more aldehydes, ketones, esters, terpenes, terpenoids, or a combination thereof.

In some embodiments, the flavoring agent comprises one or more alkyl esters comprising a Ci-Cs alkanol and a C₂-C₈ alkane carboxylic acid. In some embodiments, the one or more alkyl esters comprise isoamyl acetate, ethyl hexanoate, ethyl heptanoate, allyl hexanoate, or a combination thereof.

In some embodiments, the releasable component comprises one or more active ingredients selected from the group consisting of a nicotine component, botanicals, stimulants, amino acids, vitamins, minerals, cannabinoids, cannabimimetics, terpenes, and combinations thereof.

In some embodiments, the releasable component comprises one or more sensates.

In some embodiments, the composition comprises:
from about 0.1 to about 3% by weight of hydroxypropyl cellulose (HPC);
from about 0.1 to about 3% by weight of silica;
from about 10 to about 60% by weight of microcrystalline cellulose; and
from about 1 to about 60% by weight of water, based on the total weight of the composition.

In some embodiments, the composition further comprises one or more salts, one or more organic acids, one or more sweeteners, one or more binding agents, one or more humectants, one or more gums, a tobacco material, or combinations thereof.

In some embodiments, the composition further comprises from about 0.001 to about 10% by weight of a nicotine component, calculated as the free base and based on the total weight of the composition.

In some embodiments, the composition further comprises from about 0.1 to about 0.5% by weight of one or more organic acids, based on the total weight of the mixture.

In some embodiments, the one or more organic acids is citric acid, malic acid, tartaric acid, octanoic acid, benzoic acid, a toluic acid, salicylic acid, or a combination thereof.

In some embodiments, the composition further comprises a tobacco material.

In some embodiments, the composition comprises no more than about 10% by weight of the tobacco material, excluding any nicotine component present, based on the total weight of the composition.

In some embodiments, the composition is enclosed in a pouch to form a pouched product, the composition optionally being in a free-flowing, particulate form.

In some embodiments, the releasable component comprises one or more flavoring agents, and wherein when measured at a time period of 1 day after preparation, the composition has a concentration as determined by semi-quantitative Gas Chromatography-Mass Spectrometry of the one or more flavoring agents which is greater than a concentration of the same one or more flavoring agents present in a control composition in which the one or more flavoring agents, the cellulose derivative, and the flow aid are not present in the form of a free-flowing aggregate.

In some embodiments, the time period is one or more of 2 days, 1 week, 2 weeks, 3 weeks, or 1 month after preparation of the composition.

In another aspect is provided a method of preparing a composition configured for oral use, the method comprising:
i) combining a gelling agent such as a cellulose derivative, a flow aid, and a releasable component selected from the group consisting of flavoring agents, active ingredients, sensates, and combinations thereof to form a premix in the form of a free-flowing aggregate; and
ii) mixing the premix with a particulate filler component and water to form the composition.

In some embodiments, the cellulose derivative is a cellulose ether.

In some embodiments, the cellulose ether is one or more of methylcellulose, ethylcellulose, hydroxyethyl cellulose, hydroxypropyl cellulose (HPC), hydroxypropylmethyl cellulose (HPMC), or carboxymethyl cellulose (CMC). In some embodiments, the cellulose derivative is hydroxypropyl cellulose (HPC).

In some embodiments, the flow aid is selected from the group consisting of silica, stearic acid, stearate salts, talc, sodium stearyl fumarate, polyethylene glycol, and combinations thereof.

In some embodiments, the flow aid is silica (SiO₂).

In some embodiments, the cellulose derivative is hydroxypropyl cellulose (HPC) and the flow aid is silica.

In some embodiments, the particulate filler component comprises a cellulose material, a starch, or both. In some embodiments, the particulate filler component comprises microcrystalline cellulose.

In some embodiments, the releasable component comprises a flavoring agent comprising one or more aldehydes, ketones, esters, terpenes, terpenoids, or a combination thereof.

In some embodiments, the flavoring agent comprises one or more alkyl esters comprising a Ci-Cs alkanol and a C₂-C₈ alkane carboxylic acid. In some embodiments, the one or more alkyl esters comprise isoamyl acetate, ethyl hexanoate, ethyl heptanoate, allyl hexanoate, or a combination thereof.

In some embodiments, the releasable component comprises one or more active ingredients selected from the group consisting of a nicotine component, botanicals, stimulants, amino acids, vitamins, minerals, cannabinoids, cannabimimetics, terpenes, and combinations thereof.

In some embodiments, mixing the premix with the particulate filler component further comprises adding one or more salts, one or more sweeteners, one or more binding agents, one or more humectants, one or more gums, one or more active ingredients, a tobacco material, or combinations thereof.

In some embodiments, mixing the premix with the particulate filler component further comprises adding one or more active ingredients selected from the group consisting of a nicotine component, botanicals, stimulants, amino acids, vitamins, minerals, cannabinoids, cannabimimetics, terpenes, and combinations thereof.

In some embodiments, the method further comprises adding from about 0.001 to about 10% by weight of a nicotine component, calculated as the free base and based on the total weight of the composition.

In some embodiments, the method further comprises enclosing the composition in a pouch to form a pouched product, the composition optionally being in the form of a free-flowing aggregate.

The disclosure includes, without limitations, the following embodiments.

Embodiment 1: A composition configured for oral use, the composition comprising a particulate filler component and a free-flowing aggregate component comprising:
a gelling agent such as a cellulose derivative or alginate;
a flow aid; and
a releasable component selected from the group consisting of flavoring agents, active ingredients, sensates, and combinations thereof.

Embodiment 2: The composition of embodiment 1, comprising from about 0.1 to about 3% by weight of the cellulose derivative or other gelling agent, based on the total weight of the composition.

Embodiment 3: The composition of embodiment 1 or 2, wherein the cellulose derivative is a cellulose ether.

Embodiment 4: The composition of embodiment 3, wherein the cellulose ether is one or more of methylcellulose, ethylcellulose, hydroxyethyl cellulose, hydroxypropyl cellulose (HPC), hydroxypropylmethyl cellulose (HPMC), or carboxymethyl cellulose (CMC).

Embodiment 5: The composition of embodiment 1 or 2, wherein the cellulose derivative is hydroxypropyl cellulose (HPC).

Embodiment 6: The composition of any one of embodiments 1-5, comprising from about 0.1 to about 3% by weight of the flow aid, based on the total weight of the composition.

Embodiment 7: The composition of any one of embodiments 1-6, wherein the flow aid is selected from the group consisting of silica, stearic acid, stearate salts, talc, sodium stearyl fumarate, polyethylene glycol, and combinations thereof.

Embodiment 8: The composition of any one of embodiments 1-7, wherein the flow aid is silica (SiO₂).

Embodiment 9: The composition of any one of embodiments 1-8, wherein the cellulose derivative is hydroxypropyl cellulose (HPC) and the flow aid is silica.

Embodiment 10: The composition of any one of embodiments 1-9, wherein a ratio by weight of HPC (or other gelling agent) to silica (or other flow aid) is about 1:0.125 or lower, such as about 1:0.125 to about 1:1 or about 1:0.125 to about 1:0.5.

Embodiment 11: The composition of any one of embodiments 1-10, wherein the particulate filler component comprises a cellulose material, a starch, or both.

Embodiment 12: The composition of any one of embodiments 1-11, wherein the particulate filler component comprises microcrystalline cellulose.

Embodiment 13: The composition of any one of embodiments 1-12, wherein the releasable component comprises a flavoring agent comprising one or more aldehydes, ketones, esters, terpenes, terpenoids, or a combination thereof.

Embodiment 14: The composition of embodiment 13, wherein the flavoring agent comprises one or more alkyl esters comprising a Ci-Cs alkanol and a C₂-C₈ alkane carboxylic acid.

Embodiment 15: The composition of embodiment 14, wherein the one or more alkyl esters comprise isoamyl acetate, ethyl hexanoate, ethyl heptanoate, allyl hexanoate, or a combination thereof.

Embodiment 16: The composition of any one of embodiments 1-15, wherein the releasable component comprises one or more active ingredients selected from the group consisting of a nicotine component, botanicals, stimulants, amino acids, vitamins, minerals, cannabinoids, cannabimimetics, terpenes, and combinations thereof.

Embodiment 17: The composition of any one of embodiments 1-16, wherein the releasable component comprises one or more sensates.

Embodiment 18: The composition of any one of embodiments 1-17, comprising:
from about 0.1 to about 3% by weight of hydroxypropylcellulose (HPC);
from about 0.1 to about 3% by weight of silica;
from about 10 to about 60% by weight of microcrystalline cellulose; and
from about 1 to about 60% by weight of water, based on the total weight of the composition.

Embodiment 19: The composition of any one of embodiments 1-18, further comprising one or more salts, one or more organic acids, one or more sweeteners, one or more binding agents, one or more humectants, one or more gums, a tobacco material, or combinations thereof.

Embodiment 20: The composition of any one of embodiments 1-19, further comprising from about 0.001 to about 10% by weight of a nicotine component, calculated as the free base and based on the total weight of the composition.

Embodiment 21: The composition of any one of embodiments 1-20, further comprising from about 0.1 to about 0.5% by weight of one or more organic acids, based on the total weight of the mixture.

Embodiment 22: The composition product of embodiment 21, wherein the one or more organic acids is citric acid, malic acid, tartaric acid, octanoic acid, benzoic acid, a toluic acid, salicylic acid, or a combination thereof.

Embodiment 23: The composition of any one of embodiments 1-22, further comprising a tobacco material.

Embodiment 24: The composition of embodiment 23, wherein the composition comprises no more than about 10% by weight of the tobacco material, excluding any nicotine component present, based on the total weight of the composition.

Embodiment 25: The composition of any one of embodiments 1-24, enclosed in a pouch to form a pouched product, the composition optionally being in a free-flowing, particulate form.

Embodiment 26: The composition of any one of embodiments 1-25, wherein the releasable component comprises one or more flavoring agents, and wherein when measured at a time period of 1 day after preparation, the composition has a concentration as determined by semi-quantitative Gas Chromatography-Mass Spectrometry of the one or more flavoring agents which is greater than a concentration of the same one or more flavoring agents present in a control composition in which the one or more flavoring agents, the cellulose derivative, and the flow aid are not present in the form of a free-flowing particulate.

Embodiment 27: The composition of embodiment 26, wherein the time period is one or more of 2 days, 1 week, 2 weeks, 3 weeks, or 1 month after preparation of the composition.

Embodiment 28: A method of preparing a composition configured for oral use, the method comprising:
i) combining a gelling agent such as a cellulose derivative or alginate, a flow aid, and a releasable component selected from the group consisting of flavoring agents, active ingredients, sensates, and combinations thereof to form a premix in the form of a free-flowing aggregate; and
ii) mixing the premix with a particulate filler component and water to form the composition.

Embodiment 29: The method of embodiment 28, wherein the cellulose derivative is a cellulose ether.

Embodiment 30: The method of embodiment 29, wherein the cellulose ether is one or more of methylcellulose, hydroxyethyl cellulose, hydroxypropyl cellulose (HPC), hydroxypropylmethyl cellulose (HPMC), or carboxymethyl cellulose (CMC).

Embodiment 31: The method of embodiment 28, wherein the cellulose derivative is hydroxypropyl cellulose (HPC).

Embodiment 32: The method of any one of embodiments 28-31, wherein the flow aid is selected from the group consisting of silica, stearic acid, stearate salts, talc, sodium stearyl fumarate, polyethylene glycol, and combinations thereof.

Embodiment 33: The method of any one of embodiments 28-32, wherein the flow aid is silica (SiO₂).

Embodiment 34: The method of any one of embodiments 28-33, wherein the cellulose derivative is hydroxypropylcellulose (HPC) and the flow aid is silica.

Embodiment 35: The method of any one of embodiments 28-34, wherein the particulate filler component comprises a cellulose material, a starch, or both.

Embodiment 36: The method of any one of embodiments 28-35, wherein the particulate filler component comprises microcrystalline cellulose.

Embodiment 37: The method of any one of embodiments 28-36, wherein the releasable component comprises a flavoring agent comprising one or more aldehydes, ketones, esters, terpenes, terpenoids, or a combination thereof.

Embodiment 38: The method of embodiment 37, wherein the flavoring agent comprises one or more alkyl esters comprising a Ci-Cs alkanol and a C₂-C₈ alkane carboxylic acid.

Embodiment 39: The method of embodiment 38, wherein the one or more alkyl esters comprise isoamyl acetate, ethyl hexanoate, ethyl heptanoate, allyl hexanoate, or a combination thereof.

Embodiment 40: The method of any one of embodiments 28-39, wherein the releasable component comprises one or more active ingredients selected from the group consisting of a nicotine component, botanicals, stimulants, amino acids, vitamins, minerals, cannabinoids, cannabimimetics, terpenes, and combinations thereof.

Embodiment 41: The method of any one of embodiments 28-40, wherein mixing the premix with the particulate filler component further comprises adding one or more salts, one or more sweeteners, one or more binding agents, one or more humectants, one or more gums, one or more active ingredients, a tobacco material, or combinations thereof.

Embodiment 42: The method of any one of embodiments 28-41, wherein mixing the premix with the particulate filler component further comprises adding one or more active ingredients selected from the group consisting of a nicotine component, botanicals, stimulants, amino acids, vitamins, minerals, cannabinoids, cannabimimetics, terpenes, and combinations thereof.

Embodiment 43: The method of any one of embodiments 28-42, further comprising adding from about 0.001 to about 10% by weight of a nicotine component, calculated as the free base and based on the total weight of the composition.

Embodiment 44: The method of any one of embodiments 28-43, further comprising enclosing the product in a pouch to form a pouched product, the product optionally being in a free-flowing particulate form.

These and other features, aspects, and advantages of the disclosure will be apparent from a reading of the following detailed description together with the accompanying drawing, which is briefly described below. The disclosure includes any combination of two, three, four, or more of the above-noted embodiments as well as combinations of any two, three, four, or more features or elements set forth in this disclosure, regardless of whether such features or elements are expressly combined in a specific embodiment description herein. This disclosure is intended to be read holistically such that any separable features or elements of the disclosure, in any of its various aspects and embodiments, should be viewed as intended to be combinable unless the context clearly dictates otherwise.

### BRIEF DESCRIPTION OF THE DRAWINGS

Having thus described aspects of the disclosure in the foregoing general terms, reference will now be made to the accompanying drawings, which are not necessarily drawn to scale. The drawings are exemplary only and should not be construed as limiting the disclosure.
**FIG. 1** is a cross-sectional view of a pouched product embodiment, taken across the width of the product, showing an outer pouch filled with a mixture of the present disclosure.
**FIG. 2** is a graphical depiction of retention of the flavoring agent menthol over time in a composition according to a non-limiting embodiment of the disclosure.
**FIG. 3** is a graphical depiction of retention of the flavoring agent carvone over time in a composition according to a non-limiting embodiment of the disclosure.
**FIG. 4** is a graphical depiction of retention of the flavoring agent ethyl heptanoate over time in a composition according to a non-limiting embodiment of the disclosure.
**FIG. 5** is a graphical depiction of retention of the flavoring agent beta-ionone over time in a composition according to a non-limiting embodiment of the disclosure.
**FIGS. 6A, 6B, 6C, 6D,** and **6E** are scanning electron microscope images of precursors and components of the composition according to a non-limiting embodiment of the disclosure.

### DETAILED DESCRIPTION

The present disclosure will now be described more fully hereinafter with reference to example embodiments thereof. These example embodiments are described so that this disclosure will be thorough and complete, and will fully convey the scope of the disclosure to those skilled in the art. Indeed, the disclosure may be embodied in many different forms and should not be construed as limited to the embodiments set forth herein; rather, these embodiments are provided so that this disclosure will satisfy applicable legal requirements.

As used in this specification and the claims, the singular forms "a," "an," and "the" include plural referents unless the context clearly dictates otherwise.

The term "about" used throughout this specification is used to describe and account for small fluctuations. For example, the term "about" can refer to less than or equal to ±10%, such as less than or equal to ±5%, less than or equal to ±2%, less than or equal to ±1%, less than or equal to ±0.5%, less than or equal to ±0.2%, less than or equal to ±0.1% or less than or equal to ±0.05%. All numeric values herein are modified by the term "about," whether or not explicitly indicated. A value modified by the term "about" of course includes the specific value. For instance, "about 5.0" must include 5.0.

Reference to "dry weight percent" or "dry weight basis" refers to weight on the basis of dry ingredients (i.e., all ingredients except water). Reference to "wet weight" refers to the weight of the composition including water. Unless otherwise indicated, reference to "weight percent" of a composition reflects the total wet weight of the composition (i.e., including water).

The present disclosure provides compositions configured for oral use, products comprising such compositions, and methods of preparing the compositions. The compositions generally comprise a particulate filler component and a flowable gel component which comprises a gelling agent such as a cellulose derivative, a flow aid, and a releasable component. Each of the compositions, products, methods, and components of each thereof are further described herein below.

### Particulate Filler Component

Compositions as described herein comprise a particulate filler component. As used herein, the term "particulate" refers to a material in the form of a plurality of individual particles. In various embodiments, the particles of a particulate material (e.g., a particulate filler) can be described as substantially spherical or granular. Materials in particulate form (e.g., a particulate filler) have a particle size. The particle size of a particulate material may be measured by sieve analysis. As the skilled person will readily appreciate, sieve analysis (otherwise known as a gradation test) is a method used to measure the particle size distribution of a particulate material.

Particulate fillers may fulfill multiple functions, such as enhancing certain organoleptic properties such as texture and mouthfeel, enhancing cohesiveness or compressibility of the product, and the like. Generally, the filler is a porous particulate material and often is cellulose-based. For example, suitable fillers are any non-tobacco plant material or derivative thereof, including cellulose materials derived from such sources. Examples of cellulosic non-tobacco plant material include cereal grains (e.g., maize, oat, barley, rye, buckwheat, and the like), sugar beet (e.g., FIBREX^{®} brand filler available from International Fiber Corporation), bran fiber, and mixtures thereof. Non-limiting examples of derivatives of non-tobacco plant material include starches (e.g., from potato, wheat, rice, corn), natural cellulose, and modified cellulosic materials. Additional examples of potential fillers include maltodextrin, dextrose, calcium carbonate, calcium phosphate, lactose, mannitol, xylitol, and sorbitol. Combinations of fillers can also be used.

In some embodiments, the particulate filler comprises a starch, a cellulose material, or both. "Starch" as used herein may refer to pure starch from any source, modified starch, or starch derivatives. Starch is present, typically in granular form, in almost all green plants and in various types of plant tissues and organs (e.g., seeds, leaves, rhizomes, roots, tubers, shoots, fruits, grains, and stems). Starch can vary in composition, as well as in granular shape and size. Often, starch from different sources has different chemical and physical characteristics. A specific starch can be selected for inclusion in the mixture based on the ability of the starch material to impart a specific organoleptic property to composition. Starches derived from various sources can be used. For example, major sources of starch include cereal grains (e.g., rice, wheat, and maize) and root vegetables (e.g., potatoes and cassava). Other examples of sources of starch include acorns, arrowroot, arracacha, bananas, barley, beans (e.g., favas, lentils, mung beans, peas, chickpeas), breadfruit, buckwheat, canna, chestnuts, colacasia, katakuri, kudzu, malanga, millet, oats, oca, Polynesian arrowroot, sago, sorghum, sweet potato, quinoa, rye, tapioca, taro, tobacco, water chestnuts, and yams. Certain starches are modified starches. A modified starch has undergone one or more structural modifications, often designed to alter its high heat properties. Some starches have been developed by genetic modifications and are considered to be "modified" starches. Other starches are obtained and subsequently modified. For example, modified starches can be starches that have been subjected to chemical reactions, such as esterification, etherification, oxidation, depolymerization (thinning) by acid catalysis or oxidation in the presence of base, bleaching, transglycosylation and depolymerization (e.g., dextrinization in the presence of a catalyst), cross-linking, enzyme treatment, acetylation, hydroxypropylation, and/or partial hydrolysis. Other starches are modified by heat treatments, such as pregelatinization, dextrinization, and/or cold-water swelling processes. Certain modified starches include monostarch phosphate, distarch glycerol, distarch phosphate esterified with sodium trimetaphosphate, phosphate distarch phosphate, acetylated distarch phosphate, starch acetate esterified with acetic anhydride, starch acetate esterified with vinyl acetate, acetylated distarch adipate, acetylated distarch glycerol, hydroxypropyl starch, hydroxypropyl distarch glycerol, starch sodium octenyl succinate.

In some embodiments, a starch material provided as a filler component can also serve as an encapsulant for an active ingredient or flavor component (or other releasable component), which can provide additional stability/protection for the releasable component. For example, in some embodiments, a modified starch such as HI-CAP^{®} 100, which is a modified food starch derived from waxy maize, is used as a filler, and also functions to encapsulate a flavorant. Such starch materials provide non-polar surfaces that provide sites for non-polar flavorants to reside within the composition.

In some embodiments, the particulate filler comprises a cellulose material. One non-limiting example of a suitable cellulose material for use in the products described herein is microcrystalline cellulose ("MCC"). The mcc may be synthetic or semi-synthetic, or it may be obtained entirely from natural celluloses. The mcc may be selected from the group consisting of AVICEL^{®} grades PH-100, PH-102, PH-103, PH-105, PH-112, PH-113, PH-200, PH-300, PH-302, VIVACEL^{®} grades 101, 102, 12, 20 and EMOCEL^{®} grades 50M and 90M, and the like, and mixtures thereof. In some embodiments, the particulate filler component comprises mcc. In some embodiments, the filler component is MCC.

In some embodiments, a particulate filler can be characterized as substantially spherical, such as cellulose spheres. By "substantially spherical" is meant at least a portion of the particulate filler component is in the shape of a sphere and/or is "sphere-like' in shape. As such, "substantially spherical" encompasses slightly elongated (e.g., oval) shapes, slightly flattened shapes, and the like. Substantially spherical particulate filler components are intended to be distinguished from conventional particulate filler components (e.g., commercially available "fillers" or "particulate fillers" that are not explicitly designed as "spherical"). Such conventional particulate filler components typically substantially comprise particles with rather irregular shapes. In some cases, at least some (e.g., including a majority) of such conventional particulate filler components comprise one or more edges (e.g., jagged edges) that are typically not observable on substantially spherical particulate filler components as employed in the context of the present disclosure. Further, the uniformity of the particle shapes and sizes of a substantially spherical filler component is generally much greater than that of a conventional particulate filler component.

In some embodiments, the substantially spherical filler component comprises MCC. In some embodiments, the substantially spherical filler component comprises solid (although porous) MCC spheres. In some embodiments, the substantially spherical filler component comprises hollow MCC spheres. In some embodiments, the center/core of such hollow MCC spheres may be unfilled; in some embodiments, the center/core of such hollow MCC spheres may be filled with one or more additional components (e.g., flavorants, fillers, active ingredients, etc.). Examples of suitable MCC spheres include, but are not limited to, Vivapur^{®} MCC spheres from JRS Pharma, available, e.g., with particle sizes of 100-200 µm (Vivapur^{®} 100), 200-355 µm (Vivapur^{®} 200), 355-500 µm (Vivapur^{®} 350), 500-710 µm (Vivapur^{®} 500), 710-1000 µm (Vivapur^{®}700), and 1000-1400 µm (Vivapur^{®} 1000). Further examples of suitable MCC spheres include, but are not limited to, Celphere^{™} MCC spheres from Asahi Kasei Corporation, available, e.g., with particle sizes of 75-212 µm (Celphere^{™} SCP-100), 106-212 µm (Celphere^{™} CP-102), 150-300 µm (Celphere^{™} CP-203), 300-500 µm (Celphere^{™} CP-305), and 500-710 µm (Celphere^{™} CP-507).

The quantity of the particulate filler (*e.g.,* MCC) present in compositions as described herein may vary according to the desired properties but is typically up to about 97 dry weight percent, and some embodiments are characterized by a filler content of up to about 10 dry weight percent. The amount of filler component on a wet weight basis can vary but is typically up to about 75 percent of the total composition by weight. A typical range of filler component within the composition can be from about 10 to about 75 percent by total weight of the composition, for example, from about 10, about 15, about 20, about 25, or about 30, to about 35, about 40, about 45, about 50, about 55, about 60, about 65, about 70, or about 75 weight percent (e.g., about 15 to about 60 weight percent, or about 25 to about 45 weight percent) on a wet weight basis. In some embodiments, the amount of particulate filler component is at least about 10 percent by weight, such as at least about 20 percent, or at least about 25 percent, or at least about 30 percent, or at least about 35 percent, or at least about 40 percent, based on the total weight of the composition. In some embodiments, the particulate filler is MCC, and is present in an amount from about 10 to about 60% by weight, based on the total weight of the composition.

### Free-flowing aggregate component

Compositions as described herein comprise a free-flowing aggregate component. By free-flowing aggregate component is meant a particulate material comprising the gelling agent, a flow aid, and releasable component in intimate contact with one another. This represents more than a mere physical mixture, as the three materials, when combined, form a swollen, gel-like composite in which the various components are adsorbed and/or absorbed within one another. Further, the aggregate is free-flowing rather than be sticky, tacky, or fluid. As described further below, such free-flowing property is advantageous both in processing and in the resulting ability of the component to retain the releasable material during storage (e.g., preventing loss of volatile flavor agents through evaporation).

### Gelling agent

The free-flowing aggregate component as disclosed herein comprises a gelling agent, which is a substance capable of swelling into an absorbent gel form in the presence of water, an alcohol or glycol, or an oil. Example gelling agents include cellulose derivatives (as described in greater detail below), pectin, carbomers, natural gums, carrageenan, chitosan, gelatin, poloxamer, pullulan, cyclodextrins (e.g., beta-cyclodextrin), alginates (e.g., sodium alginate), and the like.

In one embodiment, the gelling agent is a cellulose derivative. By "cellulose derivative" is meant a cellulosic material which has been chemically modified by reaction of one or more hydroxyl groups of the cellulose polymer structure with, for example, an esterifying or alkylating agent. Cellulose derivatives include, but are not limited to, any derivative of cellulose such as cellulose esters and cellulose ethers.

In some embodiments, the cellulose derivative is a cellulose ester. By "cellulose ester" is meant a cellulose structure with the hydrogen of one or more hydroxyl groups in the cellulose polymer structure replaced with, for example, an acyl, nitro, or sulfate group. Cellulose esters may be organic esters (e.g., cellulose acetate, cellulose triacetate, cellulose propionate, cellulose acetate propionate (CAP), cellulose acetate butyrate (CAB)), or inorganic esters (e.g., nitrocellulose (cellulose nitrate), and cellulose sulfate).

In some embodiments, the cellulose derivative is a cellulose ether. By "cellulose ether" is meant a cellulose structure with the hydrogen of one or more hydroxyl groups in the cellulose polymer structure replaced with an alkyl, hydroxyalkyl, or aryl group. Cellulose ethers include, for example, alkyl ethers (e.g., methyl cellulose, ethyl cellulose), hydroxyalkyl ethers (e.g., hydroxyethyl cellulose, hydroxypropyl cellulose (HPC), hydroxyethylmethyl cellulose, hydroxypropylmethyl cellulose (HMPC), ethylhydroxyethyl cellulose), and carboxyalkyl ethers (e.g., carboxymethyl cellulose (CMC)). In some embodiments, the cellulose ether is an alkyl ether or hydroxyalkyl ether. In some embodiments, the cellulose ether comprises one or more of methylcellulose, HPC, HPMC, hydroxyethyl cellulose, or CMC. In some embodiments, the cellulose ether is HPC.

The amount of cellulose derivative present in the composition may vary. In some embodiments, the composition comprises a cellulose derivative (or other gelling agent) in an amount of at least about 0.1% by weight of the cellulose derivative, based on the total weight of the composition. In some embodiments, the composition comprises a cellulose derivative in an amount of at least about 1% by weight of a cellulose derivative, based on the total weight of the composition. In some embodiments, the composition comprises a cellulose derivative (or other gelling agent) in an amount of from about 0.5 to about 10% by weight, based on the total weight of the composition. In some embodiments, the composition comprises a cellulose derivative or other gelling agent in an amount of from about 0.1 to about 5% by weight of the cellulose derivative, for example, from about 0.1, about 0.2, about 0.3, about 0.4, about 0.5, about 0.6, about 0.7, about 0.8, about 0.9, about 1, about 1.5, about 2, about 2.5, or about 3, to about 3.5, about 4, about 4.5, or about 5% by weight. In some embodiments, the composition comprises a cellulose derivative in an amount of from about 0.1 to about 3% by weight, based on the total weight of the composition. In some embodiments, the composition comprises from about 0.1 to about 3% HPC by weight, based on the total weight of the composition.

The amount of cellulose derivative or other gelling agent within the composition can be characterized based on weight ratio with the releasable component (e.g., flavorant). For example, the weight ratio of HPC or other gelling agent to releasable component can be in the ratio of about 1:10 to about 10:1, such as about 5:1 to about 1:5 or about 3:1 to about 1:3 or about 2:1 to about 1:2 or about 1:1.

### Flow aid

The free-flowing aggregate component comprises as disclosed herein comprises a flow aid, which may also be referred to as a flow additive. Flow aids serve multiple functions, including enhancing powder flowability, lubricating, reducing adherence, and the like. In some embodiments, the flow aid is selected from the group consisting of silica (silicon dioxide; SiO₂), stearic acid, stearate salts, talc, sodium stearyl fumarate, polyethylene glycol, and combinations thereof. In some embodiments, the flow aid is silica, such as SYLOID^{®} mesoporous silica available from W. R. Grace and Company. In some embodiments, the cellulose derivative is hydroxypropyl cellulose (HPC) or hydroxypropylmethyl cellulose (HPMC) and the flow aid is silica. In some embodiments, depending on the gelling agent selected, the flow aid may be unnecessary and can be excluded.

The amount of flow aid present in the composition may vary. In some embodiments, the composition comprises from about 0.1 to about 3% by weight of the flow aid, based on the total weight of the composition.

In some embodiments, the amount of flow aid and cellulose ether (or other gelling agent) present may be expressed as a ratio by weight of the cellulose ether (or other gelling agent) to the flow aid. The ratio may vary based on, e.g., the particular cellulose ether or other gelling agent, the flow aid, and the solvent present in the flavorant. For example, in some embodiments, the flavorant is a flavor package comprising a vehicle (solvent) such as water, an alcohol or glycol, or an oil. In some embodiments, the cellulose ether is HPC, the flow aid is silica, and the ratio by weight of HPC to silica is about 1:0.125 or lower, such as about 1:0.125, about 1:0.25, about 1:0.5, about 1:1, or lower than about 1:1 (e.g., about 1:5 or about 1:3 or about 1:2). In some embodiments, the ratio is greater than 1:1, greater than 10:1, greater than 100:1, greater than 1000:1, or more. Generally, the upper limit is bounded by the low density of silica, such that high ratios result in a large volume of the mixture, eventually reaching impracticality for an oral product. It has been found according to the present disclosure that generally, flavor packages having an oil-based vehicle require a higher proportion of silica to HPC than those with a propylene glycol vehicle. Accordingly, in some embodiments, the cellulose ether is HPC, the flow aid is silica, the flavorant comprises propylene glycol, and the ratio by weight of HPC to silica is about 1:0.125 or lower. In some embodiments, the cellulose ether is HPC, the flow aid is silica, the flavorant comprises an oil vehicle, and the ratio by weight of HPC to silica is about 1:0.25 or lower. The above ratios would also apply to combinations of other gelling agents and flow aids.

Without wishing to be bound by any particular theory, it is believed that particles of HPC or other gelling agents, in contact with a flavorant comprising a solvent (e.g., water, an alcohol or glycol, or an oil), swell and become tacky while absorbing the flavorant components. In the presence of a suitable flow aid (e.g., silica), the flow aid coats the swollen particles forming an aggregate, preventing the swelled particles from sticking and clumping together. In some embodiments, the aggregate particles are relatively free-flowing and therefore easily combinable/mixable with the remainder of the composition (e.g., the filler component).

### Releasable component

The free-flowing aggregate component as disclosed herein comprises a releasable component. The term "releasable component" as used herein refers to any material that is retained by the free-flowing aggregate component and is releasable therefrom when in contact with the oral cavity of a consumer. The releasable component, in some embodiments, may be absorbed, adsorbed, or otherwise entrained within the flowable gel component or a portion thereof. In this manner, the releasable component may be retained with a desired level of stability and/or may be configured for controlled release. A wide of variety of releasable components may be utilized. In some embodiments, a plurality of releasable components may be used. Suitable releasable agents include, but are not limited to, flavoring agents, active ingredients, sensates, and combinations thereof.

### Flavoring agent

In some embodiments, the releasable component comprises one or more flavoring agents. As used herein, a "flavoring agent" or "flavorant" is any flavorful or aromatic substance capable of altering the sensory characteristics associated with the smokeless tobacco composition. Examples of sensory characteristics that can be modified by the flavoring agent include taste, mouthfeel, moistness, coolness/heat, and/or fragrance/aroma. Flavoring agents may be natural or synthetic, and the character of the flavors imparted thereby may be described, without limitation, as fresh, sweet, herbal, confectionary, floral, fruity, or spicy. Specific types of flavors include, but are not limited to, vanilla, coffee, chocolate/cocoa, cream, mint, spearmint, menthol, peppermint, wintergreen, eucalyptus, lavender, cardamon, nutmeg, cinnamon, clove, cascarilla, sandalwood, honey, jasmine, ginger, anise, sage, licorice, lemon, orange, apple, peach, lime, cherry, strawberry, and any combinations thereof. See also, Leffingwell et al., Tobacco Flavoring for Smoking Products, R. J. Reynolds Tobacco Company (1972), which is incorporated herein by reference. Flavorings also may include components that are considered moistening, cooling or smoothening agents, such as eucalyptus. These flavors may be provided neat (i.e., alone) or in a composite, and may be employed as concentrates or flavor packages (e.g., spearmint and menthol, orange and cinnamon; lime, tropical, and the like). Representative types of components also are set forth in US Pat. No. 5,387,416 to White et al.; US Pat. App. Pub. No. 2005/0244521 to Strickland et al.; and PCT Application Pub. No. WO 05/041699 to Quinter et al., each of which is incorporated herein by reference. In some instances, the flavoring agent may be provided in a spray-dried form or a liquid form.

The flavoring agent generally comprises at least one volatile flavor component. As used herein, "volatile" refers to a chemical substance that forms a vapor readily at ambient temperatures (i.e., a chemical substance that has a high vapor pressure at a given temperature relative to a nonvolatile substance). Typically, a volatile flavor component has a molecular weight below about 400 and will often include at least one carbon-carbon double bond, carbon-oxygen double bond, carbon-oxygen single bond, or combinations thereof. In one embodiment, the at least one volatile flavor component comprises one or more alcohols, aldehydes, aromatic hydrocarbons, ketones, esters, terpenes, terpenoids, or a combination thereof. Non-limiting examples of aldehydes include vanillin, ethyl vanillin, p-anisaldehyde, hexanal, furfural, isovaleraldehyde, cuminaldehyde, benzaldehyde, and citronellal. Non-limiting examples of ketones include 1-hydroxy-2-propanone and 2-hydroxy-3-methyl-2-cyclopentenone-1-one. Non-limiting examples of terpenes include sabinene, limonene, gamma-terpinene, beta-farnesene, nerolidol, thujone, myrcene, geraniol, nerol, citronellol, linalool, and eucalyptol.

In some embodiments, the at least one volatile flavor component comprises one or more esters. As used herein, the term "ester" refers to a chemical compound derived from a carboxylic acid and an alcohol, in which the -OH of the carboxyl (CO₂H) group has been replaced by the - O-alkyl (alkoxy) group of the alcohol. In some embodiments, the one or more esters are alkyl esters comprising a Ci-Cs alkanol and a C₂-C₈ alkyl carboxylic acid.

By "Ci-Cs alkanol" is meant any straight chain or branched chain hydrocarbon alcohol having from one to eight carbons. The alkanol may be saturated (i.e., having all *sp³* carbon atoms), or may be unsaturated (i.e., having at least one site of unsaturation). As used herein, the term "unsaturated" refers to the presence of a carbon-carbon, *sp²* double bond in one or more positions within the hydrocarbon chain of the alkanol. Unsaturated alkanols may be mono- or polyunsaturated. Representative straight chain alkanols include, but are not limited to, methyl, ethyl, n-propyl, n-butyl, n-pentyl, and n-hexyl. Unsaturated alkanols include, but are not limited to, allyl, butenyl, and the like. Branched chain alkanols include, but are not limited to, isopropyl, sec-butyl, isobutyl, tert-butyl, isopentyl, and 2-methylbutyl.

By "C₂-C₈ alkyl carboxylic acid" is meant any straight chain or branched chain hydrocarbon carboxylic acid having from two to eight carbons. As with the alkanols as defined above, the alkyl group of the C₂-C₈ alkyl carboxylic acid may be branched or straight chain, and saturated or unsaturated. Non limiting examples of alkyl carboxylic acids include formic, acetic, propionic, butyric, pentanoic, hexanoic, heptanoic and octanoic acids.

Non-limiting examples of alkyl esters include allyl hexanoate, ethyl heptanoate, ethyl hexanoate, isoamyl acetate, and 3-methylbutyl acetate. In one embodiment, the one or more esters present in the at least one volatile flavor component comprise isoamyl acetate, ethyl hexanoate, ethyl heptanoate, allyl hexanoate, or a combination thereof.

The amount of flavoring agent utilized in the composition can vary, but is typically up to about 10 weight percent, and some embodiments are characterized by a flavoring agent content of at least about 0.5 weight percent, such as about 0.5 to about 10 weight percent, about 1 to about 6 weight percent, or about 2 to about 5 weight percent based on the total weight of the composition.

The amount of flavoring agent (e.g., the volatile components) present within the composition may vary over a period of time (e.g., during a period of storage after preparation of the composition). For example, certain volatile components such as esters, ketones, and the like which are present in the composition (for instance, introduced in the form of a flavor package such as lime, tropical, cinnamon, and the like) may evaporate or undergo chemical transformations, leading to a reduction in the concentration of one or more of the volatile flavor components. In one embodiment, a concentration of one or more of the at least one volatile flavor components present is greater than a concentration of the same one or more volatile flavor components present in a control composition which does not include the flowable gel component.

### Active ingredient

In some embodiments, the releasable component comprises an active ingredient. As used herein, an "active ingredient" refers to one or more substances belonging to any of the following categories: API (active pharmaceutical substances), food additives, natural medicaments, and naturally occurring substances that can have an effect on humans. Example active ingredients include any ingredient known to impact one or more biological functions within the body, such as ingredients that furnish pharmacological activity or other direct effect in the diagnosis, cure, mitigation, treatment, or prevention of disease, or which affect the structure or any function of the body of humans (e.g., provide a stimulating action on the central nervous system, have an energizing effect, an antipyretic or analgesic action, or an otherwise useful effect on the body). In some embodiments, the active ingredient may be of the type generally referred to as dietary supplements, nutraceuticals, "phytochemicals" or "functional foods". These types of additives are sometimes defined in the art as encompassing substances typically available from naturally occurring sources (e.g., botanical materials) that provide one or more advantageous biological effects (e.g., health promotion, disease prevention, or other medicinal properties), but are not classified or regulated as drugs.

Non-limiting examples of active ingredients include those falling in the categories of botanical ingredients, stimulants, amino acids, nicotine components, and/or pharmaceutical, nutraceutical, and medicinal ingredients (e.g., vitamins, such as B6, B12, and C, and/or cannabinoids, such as tetrahydrocannabinol (THC) and cannabidiol (CBD)). Each of these categories is further described herein below. The particular choice of active ingredients will vary depending upon the desired flavor, texture, and desired characteristics of the particular oral product.

The particular percentages of active ingredients present will vary depending upon the desired characteristics of the particular oral product. Typically, an active ingredient or combination thereof is present in a total concentration of at least about 0.001% by weight of the composition, such as in a range from about 0.001% to about 20%. In some embodiments, the active ingredient or combination of active ingredients is present in a concentration from about 0.1% w/w to about 10% by weight, such as, e.g., from about from about 0.5% w/w to about 10%, from about 1% to about 10%, from about 1% to about 5% by weight, based on the total weight of the composition. In some embodiments, the active ingredient or combination of active ingredients is present in a concentration of from about 0.001%, about 0.01%, about 0.1% , or about 1%, up to about 20% by weight, such as, e.g., from about from about 0.001%, about 0.002%, about 0.003%, about 0.004%, about 0.005%, about 0.006%, about 0.007%, about 0.008%, about 0.009%, about 0.01%, about 0.02%, about 0.03%, about 0.04%, about 0.05%, about 0.06%, about 0.07%, about 0.08%, about 0.09%, about 0.1%, about 0.2%, about 0.3%, about 0.4%, about 0.5% about 0.6%, about 0.7%, about 0.8%, or about 0.9%, to about 1%, about 2%, about 3%, about 4%, about 5%, about 6%, about 7%, about 8%, about 9%, about 10%, about 11%, about 12%, about 13%, about 14%, about 15%, about 16%, about 17%, about 18%, about 19%, or about 20% by weight, based on the total weight of the composition. Further suitable ranges for specific active ingredients are provided herein below.

### Nicotine component

In some embodiments, the active ingredient comprises a nicotine component. By "nicotine component" is meant any suitable form of nicotine (e.g., free base or salt) for providing oral absorption of at least a portion of the nicotine present. The source of the nicotine may vary, and may be natural or synthetic. Nicotine may be tobacco-derived (e.g., a tobacco extract) or non-tobacco derived (e.g., synthetic or otherwise obtained). In some embodiments, the nicotine is naturally occurring and obtained as an extract from a *Nicotiana* species (e.g., tobacco). The nicotine can have the enantiomeric form S(-)-nicotine, R(+)-nicotine, or a mixture of *S*(-)-nicotine and *R*(+)-nicotine. In some embodiments, the nicotine is in the form of *S*(-)-nicotine (e.g., in a form that is virtually all S(-)-nicotine) or a racemic mixture composed primarily or predominantly of *S*(-)-nicotine (e.g., a mixture composed of about 95 weight parts *S*(-)-nicotine and about 5 weight parts *R*(+)-nicotine). In some embodiments, the nicotine is employed in virtually pure form or in an essentially pure form. In some embodiments, nicotine that is employed has a purity of greater than about 95 percent, such as greater than about 98 percent, or greater than about 99 percent, on a weight basis.

Typically, the nicotine component is selected from the group consisting of nicotine free base and a nicotine salt. In some embodiments, the nicotine component is nicotine in its free base form, which easily can be adsorbed in for example, a microcrystalline cellulose material to form a microcrystalline cellulose-nicotine carrier complex. See, for example, the discussion of nicotine in free base form in US Pat. Pub. No. 2004/0191322 to Hansson, which is incorporated herein by reference.

In some embodiments, at least a portion of the nicotine component can be employed in the form of a salt. Salts of nicotine can be provided using the types of ingredients and techniques set forth in US Pat. No. 2,033,909 to Cox et al. and Perfetti, Beitrage Tabakforschung Int., 12: 43-54 (1983), which are incorporated herein by reference. Additionally, salts of nicotine are available from sources such as Pfaltz and Bauer, Inc. and K&K Laboratories, Division of ICN Biochemicals, Inc. Typically, the nicotine component is selected from the group consisting of nicotine free base, a nicotine salt such as hydrochloride, dihydrochloride, monotartrate, bitartrate, sulfate, salicylate, and nicotine zinc chloride. In some embodiments, the nicotine component is nicotine bitartrate.

In some embodiments, at least a portion of the nicotine can be in the form of a resin complex of nicotine, where nicotine is bound in an ion-exchange resin, such as nicotine polacrilex, which is nicotine bound to, for example, a polymethacrylic acid, such as Amberlite IRP64, Purolite C115HMR, or Doshion P551. See, for example, US Pat. No. 3,901,248 to Lichtneckert et al., which is incorporated herein by reference. Another example is a nicotine-polyacrylic carbomer complex, such as with Carbopol 974P. In some embodiments, nicotine may be present in the form of a nicotine polyacrylic complex.

In some embodiments, at least a portion of the nicotine component can be ion paired as described further herein below.

Typically, the nicotine component (calculated as the free base) when present, is in a concentration of at least about 0.001% by weight of the composition, such as in a range from about 0.001% to about 10%. In some embodiments, the nicotine component is present in a concentration from about 0.1% w/w to about 10% by weight, such as, e.g., from about 0.1% w/w, about 0.2%, about 0.3%, about 0.4%, about 0.5% about 0.6%, about 0.7%, about 0.8%, or about 0.9%, to about 1%, about 2%, about 3%, about 4%, about 5%, about 6%, about 7%, about 8%, about 9%, or about 10% by weight, calculated as the free base and based on the total weight of the composition. In some embodiments, the nicotine component is present in a concentration from about 0.1% w/w to about 3% by weight, such as, e.g., from about 0.1% w/w to about 2.5%, from about 0.1% to about 2.0%, from about 0.1% to about 1.5%, or from about 0.1% to about 1% by weight, calculated as the free base and based on the total weight of the composition. The total amount of nicotine present may be provided by more than one source of nicotine, such as various combinations of any of nicotine free base, nicotine salt, ion paired nicotine, and polymer-bound nicotine (e.g., nicotine polacrilex). In some embodiments, the nicotine component is nicotine benzoate, nicotine polacrilex, or a mixture thereof.

In some embodiments, the product or composition of the disclosure can be characterized as completely free or substantially free of any nicotine component (e.g., any embodiment as disclosed herein may be completely or substantially free of any nicotine component). By "substantially free" is meant that no nicotine has been intentionally added, beyond trace amounts that may be naturally present in e.g., a botanical material. For example, some embodiments can be characterized as having less than 0.001% by weight of nicotine, or less than 0.0001%, or even 0% by weight of nicotine, calculated as the free base.

### Botanical

In some embodiments, the active ingredient comprises a botanical ingredient. As used herein, the term "botanical ingredient" or "botanical" refers to any plant material or fungal-derived material, including plant material in its natural form and plant material derived from natural plant materials, such as extracts or isolates from plant materials or treated plant materials (e.g., plant materials subjected to heat treatment, fermentation, bleaching, or other treatment processes capable of altering the physical and/or chemical nature of the material). For the purposes of the present disclosure, a "botanical" includes, but is not limited to, "herbal materials," which refer to seed-producing plants that do not develop persistent woody tissue and are often valued for their medicinal or sensory characteristics (e.g., teas or tisanes). Reference to botanical material as "non-tobacco" is intended to exclude tobacco materials (i.e., does not include any *Nicotiana* species). The botanical materials used in the present disclosure may comprise, without limitation, any of the compounds and sources set forth herein, including mixtures thereof. Certain botanical materials of this type are sometimes referred to as dietary supplements, nutraceuticals, "phytochemicals" or "functional foods."

When present, a botanical is typically at a concentration of from about 0.01% w/w to about 10% by weight, such as, e.g., from about from about 0.01% w/w, about 0.05%, about 0.1 %, or about 0.5%, to about 1%, about 2%, about 3 %, about 4%, about 5%, about 6%, about 7%, about 8%, about 9%, or about 10%, about 11%, about 12%, about 13%, about 14%, or about 15% by weight, based on the total weight of the composition.

The botanical materials useful in the present disclosure may comprise, without limitation, any of the compounds and sources set forth herein, including mixtures thereof. Certain botanical materials of this type are sometimes referred to as dietary supplements, nutraceuticals, "phytochemicals" or "functional foods." Certain botanicals, as the plant material or an extract thereof, have found use in traditional herbal medicine, and are described further herein.

Non-limiting examples of non-tobacco botanical materials include without limitation acai berry (Euterpe oleracea martius), acerola (Malpighia glabra), alfalfa, allspice, Angelica root, anise (e.g., star anise), annatto seed, apple (*Malus domestica*), apricot oil, ashwagandha, *Bacopa monniera*, baobab, basil (*Ocimum basilicum*), bay, bee balm, beet root, bergamot, blackberry (*Morus nigra*), black cohosh, black pepper, black tea, blueberries, boldo (*Peumus boldus*), borage, bugleweed, cacao, calamus root, camu (*Myrcaria dubia*), cannabis/hemp, caraway seed, cardamom, cassis, catnip, catuaba, cayenne pepper, *Centella asiatica,* chaga mushroom, Chai-hu, chamomile, cherry, chervil, chive, chlorophyll, chocolate, cilantro, cinnamon (*Cinnamomum cassia*), citron grass (*Cymbopogon citratus*), citrus, clary sage, cloves, coconut (*Cocos nucifera*), coffee, comfrey leaf and root, cordyceps, coriander seed, cranberry, cumin, curcumin, damiana, dandelion, *Dorstenia arifolia, Dorstenia odorata,* Echinacea, elderberry, elderflower, endro (*Anethum graveolens*), evening primrose, eucalyptus, fennel, feverfew, flax, *Galphimia glauca*, garlic, ginger (*Zingiber officinale*), gingko biloba, ginseng, goji berries, goldenseal, grape seed, grapefruit, grapefruit rosé (*Citrus paradisi*), graviola (*Annona muricata*), green tea, guarana, gutu kola, hawthorn, hazel, hemp, hibiscus flower (*Hibiscus sabdariffa*), honeybush, hops, jiaogulan, jambu (*Spilanthes oleraceae*), jasmine (*Jasminum officinale*), juniper berry (*Juniperus communis*), *Kaempferia parviflora* (Thai ginseng), kava, laurel, lavender, lemon (*Citrus limon*), lemon balm, lemongrass, licorice, lilac, Lion's mane, lutein, maca (*Lepidium meyenii*), mace, marjoram, matcha, milk thistle, mints (menthe), mulberry, *Nardostachys chinensis,* nutmeg, olive, oolong tea, orange (*Citrus sinensis*), oregano, papaya, paprika, pennyroyal, peppermint (*Mentha piperita*), pimento, potato peel, primrose, quercetin, quince, red clover, resveratrol, *Rhizoma gastrodiae, Rhodiola,* rooibos (red or green), rosehip (*Rosa canina*), rosemary, saffron, sage, Saint John's Wort, sandalwood, salvia (*Salvia officinalis*), savory, saw palmetto, *Sceletium tortuosum*, Schisandra, silybum marianum, Skullcap, spearmint, Spikenard, spirulina, slippery elm bark, sorghum bran hi-tannin, sorghum grain hi-tannin, spearmint (*Mentha spicata*), spirulina, star anise, sumac bran, tarragon, thyme, tisanes, turmeric, *Turnera aphrodisiaca,* uva ursi, valerian, vanilla, *Viola odorata*, wild yam root, wintergreen, withania somnifera, yacon root, yellow dock, yerba mate, and yerba santa.

### Stimulants

In some embodiments, the active ingredient comprises one or more stimulants. As used herein, the term "stimulant" refers to a material that increases activity of the central nervous system and/or the body, for example, enhancing focus, cognition, vigor, mood, alertness, and the like. Non-limiting examples of stimulants include caffeine, theacrine, theobromine, and theophylline. Theacrine (1,3,7,9-tetramethyluric acid) is a purine alkaloid which is structurally related to caffeine, and possesses stimulant, analgesic, and anti-inflammatory effects. Present stimulants may be natural, naturally derived, or wholly synthetic. For example, certain botanical materials (guarana, tea, coffee, cocoa, and the like) may possess a stimulant effect by virtue of the presence of e.g., caffeine or related alkaloids, and accordingly are "natural" stimulants. By "naturally derived" is meant the stimulant (e.g., caffeine, theacrine) is in a purified form, outside its natural (e.g., botanical) matrix. For example, caffeine can be obtained by extraction and purification from botanical sources (e.g., tea). By "wholly synthetic", it is meant that the stimulant has been obtained by chemical synthesis. In some embodiments, the active ingredient comprises caffeine. In some embodiments, the active ingredient is caffeine. In some embodiments, the caffeine is present in an encapsulated form. On example of an encapsulated caffeine is Vitashure^{®}, available from Balchem Corp., 52 Sunrise Park Road, New Hampton, NY, 10958.

When present, a stimulant or combination of stimulants (e.g., caffeine, theacrine, and combinations thereof) is typically at a concentration of from about 0.1% w/w to about 15% by weight, such as, e.g., from about from about 0.1% w/w, about 0.2%, about 0.3%, about 0.4%, about 0.5% about 0.6%, about 0.7%, about 0.8%, or about 0.9%, to about 1%, about 2%, about 3%, about 4%, about 5%, about 6%, about 7%, about 8%, about 9%, about 10%, about 11%, about 12%, about 13%, about 14%, or about 15% by weight, based on the total weight of the composition.

### Amino acids

In some embodiments, the active ingredient comprises an amino acid. As used herein, the term "amino acid" refers to an organic compound that contains amine (-NH₂) and carboxyl (-COOH) or sulfonic acid (SO₃H) functional groups, along with a side chain (R group), which is specific to each amino acid. Amino acids may be proteinogenic or non-proteinogenic. By "proteinogenic" is meant that the amino acid is one of the twenty naturally occurring amino acids found in proteins. The proteinogenic amino acids include alanine, arginine, asparagine, aspartic acid, cysteine, glutamine, glutamic acid, glycine, histidine, isoleucine, leucine, lysine, methionine, phenylalanine, proline, serine, threonine, tryptophan, tyrosine, and valine. By "non-proteinogenic" is meant that either the amino acid is not found naturally in protein or is not directly produced by cellular machinery (e.g., is the product of post-translational modification). Non-limiting examples of non-proteinogenic amino acids include gamma-aminobutyric acid (GABA), taurine (2-aminoethanesulfonic acid), theanine (L-γ-glutamylethylamide), hydroxyproline, and beta-alanine.

When present, an amino acid or combination of amino acids (e.g., taurine, theanine, and combinations thereof) is typically at a concentration of from about 0.1% w/w to about 15% by weight, such as, e.g., from about from about 0.1% w/w, about 0.2%, about 0.3%, about 0.4%, about 0.5% about 0.6%, about 0.7%, about 0.8%, or about 0.9%, to about 1%, about 2%, about 3%, about 4%, about 5%, about 6%, about 7%, about 8%, about 9%, about 10%, about 11%, about 12%, about 13%, about 14%, or about 15% by weight, based on the total weight of the composition.

### Vitamins and Minerals

In some embodiments, the active ingredient comprises a vitamin or combination of vitamins. As used herein, the term "vitamin" refers to an organic molecule (or related set of molecules) that is an essential micronutrient needed for the proper functioning of metabolism in a mammal. There are thirteen vitamins required by human metabolism, which are: vitamin A (as all-trans-retinol, all-trans-retinyl-esters, as well as all-trans-beta-carotene and other provitamin A carotenoids), vitamin B1 (thiamine), vitamin B2 (riboflavin), vitamin B3 (niacin), vitamin B5 (pantothenic acid), vitamin B6 (pyridoxine), vitamin B7 (biotin), vitamin B9 (folic acid or folate), vitamin B12 (cobalamins), vitamin C (ascorbic acid), vitamin D (calciferols), vitamin E (tocopherols and tocotrienols), and vitamin K (quinones). In some embodiments, the active ingredient comprises vitamin C. In some embodiments, the active ingredient is a combination of vitamin C, caffeine, and taurine. In some embodiments, the active ingredient comprises one or more of vitamin B6 and B12. In some embodiments, the active ingredient comprises theanine and one or more of vitamin B6 and B 12.

When present, a vitamin or combination of vitamins (e.g., vitamin B6, vitamin B12, vitamin E, vitamin C, or a combination thereof) is typically at a concentration of from about 0.01% w/w to about 1% by weight, such as, e.g., from about 0.01%, about 0.02%, about 0.03%, about 0.04%, about 0.05%, about 0.06%, about 0.07%, about 0.08%, about 0.09%, or about 0.1% w/w, to about 0.2%, about 0.3%, about 0.4%, about 0.5% about 0.6%, about 0.7%, about 0.8%, about 0.9%, or about 1% by weight, based on the total weight of the composition.

In some embodiments, the active ingredient comprises vitamin A. In some embodiments, the vitamin A is encapsulated. In some embodiments, the vitamin is vitamin B6, vitamin B12, vitamin E, vitamin C, or a combination thereof.

In some embodiments, the active ingredient comprises a mineral. As used herein, the term "mineral" refers to an inorganic molecule (or related set of molecules) that is an essential micronutrient needed for the proper functioning of various systems in a mammal. Non-limiting examples of minerals include iron, zinc, copper, selenium, chromium, cobalt, manganese, calcium, phosphorus, sulfur, magnesium, and the like. In some embodiments, the active ingredient comprises iron. Suitable sources of iron include, but are not limited to, ferrous salts such as ferrous sulfate and ferrous gluconate. In some embodiments, the iron is encapsulated.

### Cannabinoids

In some embodiments, the active ingredient comprises one or more cannabinoids. As used herein, the term "cannabinoid" refers to a class of diverse natural or synthetic chemical compounds that acts on cannabinoid receptors (i.e., CB1 and CB2) in cells that alter neurotransmitter release in the brain. Cannabinoids are cyclic molecules exhibiting particular properties such as the ability to easily cross the blood-brain barrier. Cannabinoids may be naturally occurring (Phytocannabinoids) from plants such as cannabis, (endocannabinoids) from animals, or artificially manufactured (synthetic cannabinoids). Cannabis species express at least 85 different phytocannabinoids, and these may be divided into subclasses, including cannabigerols, cannabichromenes, cannabidiols, tetrahydrocannabinols, cannabinols and cannabinodiols, and other cannabinoids, such as cannabigerol (CBG), cannabichromene (CBC), cannabidiol (CBD), tetrahydrocannabinol (THC), cannabinol (CBN) and cannabinodiol (CBDL), cannabicyclol (CBL), cannabivarin (CBV), tetrahydrocannabivarin (THCV), cannabidivarin (CBDV), cannabichromevarin (CBCV), cannabigerovarin (CBGV), cannabigerol monomethyl ether (CBGM), cannabinerolic acid, cannabidiolic acid (CBDA), cannabinol propyl variant (CBNV), cannabitriol (CBO), tetrahydrocannabmolic acid (THCA), and tetrahydrocannabivarinic acid (THCV A).

In some embodiments, the cannabinoid is selected from the group consisting of cannabigerol (CBG), cannabichromene (CBC), cannabidiol (CBD), tetrahydrocannabinol (THC), cannabinol (CBN) and cannabinodiol (CBDL), cannabicyclol (CBL), cannabivarin (CBV), tetrahydrocannabivarin (THCV), cannabidivarin (CBDV), cannabichromevarin (CBCV), cannabigerovarin (CBGV), cannabigerol monomethyl ether (CBGM), cannabinerolic acid, cannabidiolic acid (CBDA), Cannabinol propyl variant (CBNV), cannabitriol (CBO), tetrahydrocannabinolic acid (THCA), tetrahydrocannabivarinic acid (THCV A), and mixtures thereof. In some embodiments, the cannabinoid comprises at least tetrahydrocannabinol (THC). In some embodiments, the cannabinoid is tetrahydrocannabinol (THC). In some embodiments, the cannabinoid comprises at least cannabidiol (CBD). In some embodiments, the cannabinoid is cannabidiol (CBD). In some embodiments, the CBD is synthetic CBD.

In some embodiments, the cannabinoid (e.g., CBD) is added to the composition in the form of an isolate. An isolate is an extract from a plant, such as cannabis, where the active material of interest (in this case the cannabinoid, such as CBD) is present in a high degree of purity, for example greater than 95%, greater than 96%, greater than 97%, greater than 98%, or around 99% purity.

In some embodiments, the cannabinoid is an isolate of CBD in a high degree of purity, and the amount of any other cannabinoid in the composition is no greater than about 1% by weight of the composition, such as no greater than about 0.5% by weight of the composition, such as no greater than about 0.1% by weight of the composition, such as no greater than about 0.01% by weight of the composition.

The choice of cannabinoid and the particular percentages thereof which may be present within the disclosed composition will vary depending upon the desired flavor, texture, and other characteristics of the composition.

In some embodiments, the cannabinoid (such as CBD) is present in the composition in a concentration of at least about 0.001% by weight of the composition, such as in a range from about 0.001% to about 2% by weight of the composition. In some embodiments, the cannabinoid (such as CBD) is present in the composition in a concentration of from about 0.1% to about 1.5% by weight, based on the total weight of the composition. In some embodiments, the cannabinoid (such as CBD) is present in a concentration from about 0.4% to about 1.5% by weight, based on the total weight of the oral composition.

Alternatively, or in addition to the cannabinoid, the active ingredient may include a cannabimimetic, which is a class of compounds derived from plants other than cannabis that have biological effects on the endocannabinoid system similar to cannabinoids. Examples include yangonin, alpha-amyrin or beta-amyrin (also classified as terpenes), cyanidin, curcumin (tumeric), catechin, quercetin, salvinorin A, N-acylethanolamines, and N-alkylamide lipids. Such compounds can be used in the same amounts and ratios noted herein for cannabinoids.

### Terpenes

Active ingredients suitable for use in the present disclosure can also be classified as terpenes, many of which are associated with biological effects, such as calming effects. Terpenes are understood to have the general formula of (C₅H₈)ₙ and include monoterpenes, sesquiterpenes, and diterpenes. Terpenes can be acyclic, monocyclic or bicyclic in structure. Some terpenes provide an entourage effect when used in combination with cannabinoids or cannabimimetics. Examples include beta-caryophyllene, linalool, limonene, beta-citronellol, linalyl acetate, pinene (alpha or beta), geraniol, carvone, eucalyptol, menthone, iso-menthone, piperitone, myrcene, beta-bourbonene, and germacrene, which may be used singly or in combination.

In some embodiments, the terpene is a terpene derivable from a phytocannabinoid producing plant, such as a plant from the stain of the cannabis sativa species, such as hemp. Suitable terpenes in this regard include so-called "C10" terpenes, which are those terpenes comprising 10 carbon atoms, and so-called "C15" terpenes, which are those terpenes comprising 15 carbon atoms. In some embodiments, the active ingredient comprises more than one terpene. For example, the active ingredient may comprise one, two, three, four, five, six, seven, eight, nine, ten or more terpenes as defined herein. In some embodiments, the terpene is selected from pinene (alpha and beta), geraniol, linalool, limonene, carvone, eucalyptol, menthone, iso-menthone, piperitone, myrcene, beta-bourbonene, germacrene and mixtures thereof.

### Antioxidants

In some embodiments, the active ingredient comprises one or more antioxidants. As used herein, the term "antioxidant" refers to a substance which prevents or suppresses oxidation by terminating free radical reactions and may delay or prevent some types of cellular damage. Antioxidants may be naturally occurring or synthetic. Naturally occurring antioxidants include those found in foods and botanical materials. Non-limiting examples of antioxidants include certain botanical materials, vitamins, polyphenols, and phenol derivatives.

Examples of botanical materials which are associated with antioxidant characteristics include without limitation acai berry, alfalfa, allspice, annatto seed, apricot oil, basil, bee balm, wild bergamot, black pepper, blueberries, borage seed oil, bugleweed, cacao, calamus root, catnip, catuaba, cayenne pepper, chaga mushroom, chervil, cinnamon, dark chocolate, potato peel, grape seed, ginseng, gingko biloba, Saint John's Wort, saw palmetto, green tea, black tea, black cohosh, cayenne, chamomile, cloves, cocoa powder, cranberry, dandelion, grapefruit, honeybush, echinacea, garlic, evening primrose, feverfew, ginger, goldenseal, hawthorn, hibiscus flower, jiaogulan, kava, lavender, licorice, marjoram, milk thistle, mints (menthe), oolong tea, beet root, orange, oregano, papaya, pennyroyal, peppermint, red clover, rooibos (red or green), rosehip, rosemary, sage, clary sage, savory, spearmint, spirulina, slippery elm bark, sorghum bran hi-tannin, sorghum grain hi-tannin, sumac bran, comfrey leaf and root, goji berries, gutu kola, thyme, turmeric, uva ursi, valerian, wild yam root, wintergreen, yacon root, yellow dock, yerba mate, yerba santa, bacopa monniera, withania somnifera, Lion's mane, and silybum marianum. Such botanical materials may be provided in fresh or dry form, essential oils, or may be in the form of an extracts. The botanical materials (as well as their extracts) often include compounds from various classes known to provide antioxidant effects, such as minerals, vitamins, isoflavones, phytoesterols, allyl sulfides, dithiolthiones, isothiocyanates, indoles, lignans, flavonoids, polyphenols, and carotenoids. Examples of compounds found in botanical extracts or oils include ascorbic acid, peanut endocarb, resveratrol, sulforaphane, beta-carotene, lycopene, lutein, co-enzyme Q, carnitine, quercetin, kaempferol, and the like. See, e.g., Santhosh et al., Phytomedicine, 12(2005) 216-220, which is incorporated herein by reference.

Non-limiting examples of other suitable antioxidants include citric acid, Vitamin E or a derivative thereof, a tocopherol, epicatechol, epigallocatechol, epigallocatechol gallate, erythorbic acid, sodium erythorbate, 4-hexylresorcinol, theaflavin, theaflavin monogallate A or B, theaflavin digallate, phenolic acids, glycosides, quercitrin, isoquercitrin, hyperoside, polyphenols, catechols, resveratrols, oleuropein, butylated hydroxyanisole (BHA), butylated hydroxytoluene (BHT), tertiary butylhydroquinone (TBHQ), and combinations thereof.

When present, an antioxidant is typically at a concentration of from about 0.001% w/w to about 10% by weight, such as, e.g., from about from about 0.001%, about 0.005%, about 0.01% w/w, about 0.05%, about 0.1%, or about 0.5%, to about 1%, about 2%, about 3%, about 4%, about 5%, about 6%, about 7%, about 8%, about 9%, or about 10%, based on the total weight of the composition.

### Pharmaceutical ingredients

In some embodiments, the active ingredient comprises an active pharmaceutical ingredient (API). The API can be any known agent adapted for therapeutic, prophylactic, or diagnostic use. These can include, for example, synthetic organic compounds, proteins and peptides, polysaccharides and other sugars, lipids, phospholipids, inorganic compounds (e.g., magnesium, selenium, zinc, nitrate), neurotransmitters or precursors thereof (e.g., serotonin, 5-hydroxytryptophan, oxitriptan, acetylcholine, dopamine, melatonin), and nucleic acid sequences, having therapeutic, prophylactic, or diagnostic activity. Non-limiting examples of APIs include analgesics and antipyretics (e.g., acetylsalicylic acid, acetaminophen, 3-(4-isobutylphenyl)propanoic acid), phosphatidylserine, myoinositol, docosahexaenoic acid (DHA, Omega-3), arachidonic acid (AA, Omega-6), S-adenosylmethionine (SAM), beta-hydroxy-beta-methylbutyrate (HMB), citicoline (cytidine-5'-diphosphate-choline), and cotinine.

The amount of API may vary. For example, when present, an API is typically at a concentration of from about 0.001% w/w to about 10% by weight, such as, e.g., from about from about 0.01%, about 0.02%, about 0.03%, about 0.04%, about 0.05%, about 0.06%, about 0.07%, about 0.08%, about 0.09%, about 0.1% w/w, about 0.2%, about 0.3%, about 0.4%, about 0.5% about 0.6%, about 0.7%, about 0.8%, about 0.9%, or about 1%, to about 2%, about 3%, about 4%, about 5%, about 6%, about 7%, about 8%, about 9%, or about 10% by weight, based on the total weight of the composition.

### Ion Pairing of Basic Amine-Containing Active Ingredients and Organic Acids

In some embodiments, the active ingredient has a basic amine functionality (i.e., the active ingredient comprises a basic amine). By "basic amine" is meant a molecule including at least one basic amine functional group. Examples of basic amines include, but are not limited to, alkaloids. By "basic amine functional group" is meant a group containing a nitrogen atom having a lone pair of electrons. The basic amine functional group is attached to or incorporated within the molecule through one or more covalent bonds to the said nitrogen atom. The basic amine may be a primary, secondary, or tertiary amine, meaning the nitrogen bears one, two, or three covalent bonds to carbon atoms. By virtue of the lone pair of electrons on the nitrogen atom, such amines are termed "basic", meaning the lone electron pair is available for hydrogen bonding. The basicity (i.e., the electron density on the nitrogen atom and consequently the availability and strength of hydrogen bonding to the nitrogen atom) of the basic amine may be influenced by the nature of neighboring atoms, the steric bulk of the molecule, and the like.

Generally, the basic amine is released from the composition and absorbed through the oral mucosa, thereby entering the blood stream, where it is circulated systemically. Generally, the basic amine is present in or as an active ingredient in the composition, as described herein below.

In some embodiments, the active ingredient having the basic amine functionality is caffeine. In some embodiments, the active ingredient having a basic amine functionality is nicotine, for example, a nicotine component as described herein above.

In some embodiments, at least a portion the active ingredient having the basic amine functionality (e.g., nicotine) is associated with at least a portion of the organic acid or the alkali metal salt thereof which may be present in some embodiments. Depending on multiple variables (concentration, pH, nature of the organic acid, and the like), the active ingredient having the basic amine functionality present in the composition can exist in multiple forms, including ion paired, in solution (i.e., fully solvated), as the free base, as a cation, as a salt, or any combination thereof.

In some embodiments, at least a portion of the active ingredient present in the composition and having the basic amine functionality is in an ion paired form with an organic acid or conjugate base thereof as further described herein below. In some embodiments, the active ingredient having the basic amine functionality and at least a portion of the organic acid or the alkali metal salt thereof is in the form of an ion pair between the basic amine and a conjugate base of the organic acid.

Ion pairing describes the partial association of oppositely charged ions in relatively concentrated solutions to form distinct chemical species called ion pairs. The strength of the association (i.e., the ion pairing) depends on the electrostatic force of attraction between the positive and negative ions (i.e., a protonated basic amine and the conjugate base of an organic acid). By "conjugate base" is meant the base resulting from deprotonation of the corresponding acid (e.g., benzoate is the conjugate base of benzoic acid).

On average, a certain population of these ion pairs exists at any given time, although the formation and dissociation of ion pairs is continuous. In the composition as disclosed herein, and/or upon oral use of said composition (e.g., upon contact with saliva), the active ingredient having the basic amine functionality and the conjugate base of the organic acid exist at least partially in the form of an ion pair. Without wishing to be bound by theory, it is believed that such ion pairing may minimize chemical degradation of the active ingredient having the basic amine functionality and/or enhance the oral availability of the active ingredient having the basic amine functionality. At alkaline pH values (e.g., such as from about 7.5 to about 9), certain active ingredient having the basic amine functionality, for example nicotine, are largely present in the free base form, which has relatively low water solubility, and low stability with respect to evaporation and oxidative decomposition, but high mucosal availability. Conversely, at acidic pH values (such as from about 6.5 to about 4), certain active ingredient having the basic amine functionality, for example nicotine, are largely present in a protonated form, which has relatively high solubility in water, and higher stability with respect to evaporation and oxidative decomposition, but low mucosal availability. In some embodiments, the properties of stability, solubility, and availability of nicotine can be enhanced through ion pairing or salt formation of nicotine with appropriate organic acids and/or their conjugate bases. Specifically, nicotine-organic acid ion pairs of moderate lipophilicity result in favorable stability and absorption properties. Lipophilicity is conveniently measured in terms of logP, the partition coefficient of a molecule between a lipophilic phase and an aqueous phase, usually octanol and water, respectively. An octanol-water partitioning favoring distribution of an ion pair into octanol is predictive of good absorption of the active ingredient having the basic amine functionality present in the composition through the oral mucosa.

As noted above, at alkaline pH values (e.g., such as from about 7.5 to about 9), nicotine is largely present in the free base form (and accordingly, a high partitioning into octanol), while, at acidic pH values (such as from about 6.5 to about 4), nicotine is largely present in a protonated form (and accordingly, a low partitioning into octanol). Surprisingly, according to the present disclosure, it has been found that an ion pair between certain organic acids (e.g., having a logP value of from about 1.4 to about 8.0. such as from about 1.4 to about 4.5, allows nicotine partitioning into octanol consistent with that predicted for nicotine partitioning into octanol at a pH of 8.4.

One of skill in the art will recognize that the extent of ion pairing in the disclosed composition, both before and during use by the consumer, may vary based on, for example, pH, the nature of the organic acid, the concentration of nicotine, the concentration of the organic acid or conjugate base of the organic acid present in the composition, the moisture content of the composition, the ionic strength of the composition, and the like. One of skill in the art will also recognize that ion pairing is an equilibrium process influenced by the foregoing variables. Accordingly, quantification of the extent of ion pairing is difficult or impossible by calculation or direct observation. However, the presence of ion pairing may be demonstrated through surrogate measures such as partitioning between octanol and water or membrane permeation of aqueous solutions of nicotine plus organic acids and/or their conjugate bases.

### Organic acid

As discussed herein above, in some embodiments, the oral composition as disclosed herein comprises an organic acid, an alkali metal salt thereof, or both. In some embodiments, at least a portion of the organic acid or salt thereof is in the form of an ion pair with a basic amine-containing active ingredient as described herein above.

As used herein, the term "organic acid" refers to an organic (i.e., carbon-based) compound that is characterized by acidic properties. Typically, organic acids are relatively weak acids (i.e., they do not dissociate completely in the presence of water), such as carboxylic acids (-CO₂H) or sulfonic acids (-SO₂OH). As used herein, reference to organic acid means an organic acid that is intentionally added. In this regard, an organic acid may be intentionally added as a specific composition ingredient as opposed to merely being inherently present as a component of another composition ingredient (e.g., the small amount of organic acid which may inherently be present in a composition ingredient, such as a tobacco material).

Suitable organic acids will typically have a range of lipophilicities (i.e., a polarity giving an appropriate balance of water and organic solubility). Typically, lipophilicities of suitable organic acids, as indicated by logP, will vary between about 1 and about 12 (more soluble in octanol than in water). In some embodiments, the organic acid has a logP value from about 1 to about 12, e.g., from about 1.0. about 1.5, about 2.0, about 2.5, about 3.0, about 3.5, about 4.0, about 4.5, about 5.0, about 5.5, about 6.0, about 6.5, about 7.0, about 7.5, or about 8.0, to about 8.5, about 9.0, about 9.5, about 10.0, about 10.5, about 11.0, about 11.5, or about 12.0.

Without wishing to be bound by theory, it is believed that moderately lipophilic organic acids (e.g., logP of from about 1.4 to about 4.5) produce ion pairs with nicotine which are of a polarity providing good octanol-water partitioning of the ion pair, and hence partitioning of nicotine, into octanol versus water. As discussed above, such partitioning into octanol is predictive of favorable oral availability.

In some embodiments, the organic acid has a logP value from about 3.0 to about 8.0, about 10.0, or even 12.0. In some embodiments, the presence of certain solvents or solubilizing agents (e.g., inclusion in the composition of glycerin or propylene glycol) may be beneficial in solubilizing organic acids and the corresponding salts or ion pairs thereof with the basic amine for highly lipophilic organic acids (e.g., higher than about 4.5).

In some embodiments, the organic acid is a carboxylic acid or a sulfonic acid. The carboxylic acid or sulfonic acid functional group may be attached to any alkyl, cycloalkyl, heterocycloalkyl, aryl, or heteroaryl group having, for example, from one to twenty carbon atoms (C1-C20). In some embodiments, the organic acid is an alkyl, cycloalkyl, heterocycloalkyl, aryl, or heteroaryl carboxylic or sulfonic acid.

As used herein, "alkyl" refers to any straight chain or branched chain hydrocarbon. The alkyl group may be saturated (i.e., having all sp3 carbon atoms), or may be unsaturated (i.e., having at least one site of unsaturation). As used herein, the term "unsaturated" refers to the presence of a carbon-carbon, sp2 double bond in one or more positions within the alkyl group. Unsaturated alkyl groups may be mono- or polyunsaturated. Representative straight chain alkyl groups include, but are not limited to, methyl, ethyl, n-propyl, n-butyl, n-pentyl, and n-hexyl. Branched chain alkyl groups include, but are not limited to, isopropyl, sec-butyl, isobutyl, tert-butyl, isopentyl, and 2-methylbutyl. Representative unsaturated alkyl groups include, but are not limited to, ethylene or vinyl, allyl, 1-butenyl, 2-butenyl, isobutylenyl, 1-pentenyl, 2-pentenyl, 3-methyl-1-butenyl, 2-methyl-2-butenyl, 2,3-dimethyl-2-butenyl, and the like. An alkyl group can be unsubstituted or substituted.

"Cycloalkyl" as used herein refers to a carbocyclic group, which may be mono- or bicyclic. Cycloalkyl groups include rings having 3 to 7 carbon atoms as a monocycle or 7 to 12 carbon atoms as a bicycle. Examples of monocyclic cycloalkyl groups include cyclopropyl, cyclobutyl, cyclopentyl, cyclohexyl, cycloheptyl, and cyclooctyl. A cycloalkyl group can be unsubstituted or substituted, and may include one or more sites of unsaturation (e.g., cyclopentenyl or cyclohexenyl).

The term "aryl" as used herein refers to a carbocyclic aromatic group. Examples of aryl groups include, but are not limited to, phenyl and naphthyl. An aryl group can be unsubstituted or substituted.

"Heteroaryl" and "heterocycloalkyl" as used herein refer to an aromatic or non-aromatic ring system, respectively, in which one or more ring atoms is a heteroatom, e.g., nitrogen, oxygen, and sulfur. The heteroaryl or heterocycloalkyl group comprises up to 20 carbon atoms and from 1 to 3 heteroatoms selected from N, O, and S. A heteroaryl or heterocycloalkyl may be a monocycle having 3 to 7 ring members (for example, 2 to 6 carbon atoms and 1 to 3 heteroatoms selected from N, O, and S) or a bicycle having 7 to 10 ring members (for example, 4 to 9 carbon atoms and 1 to 3 heteroatoms selected from N, O, and S), for example: a bicyclo[4,5], [5,5], [5,6], or [6,6] system. Examples of heteroaryl groups include by way of example and not limitation, pyridyl, thiazolyl, tetrahydrothiophenyl, pyrimidinyl, furanyl, thienyl, pyrrolyl, pyrazolyl, imidazolyl, tetrazolyl, benzofuranyl, thianaphthalenyl, indolyl, indolenyl, quinolinyl, isoquinolinyl, benzimidazolyl, isoxazolyl, pyrazinyl, pyridazinyl, indolizinyl, isoindolyl, 3H-indolyl, 1H-indazolyl, purinyl, 4H-quinolizinyl, phthalazinyl, naphthyridinyl, quinoxalinyl, quinazolinyl, cinnolinyl, pteridinyl, 4aH-carbazolyl, carbazolyl, phenanthridinyl, acridinyl, pyrimidinyl, phenanthrolinyl, phenazinyl, phenothiazinyl, furazanyl, phenoxazinyl, isochromanyl, chromanyl, imidazolidinyl, imidazolinyl, pyrazolidinyl, pyrazolinyl, benzotriazolyl, benzisoxazolyl, and isatinoyl. Examples of heterocycloalkyls include by way of example and not limitation, dihydroypyridyl, tetrahydropyridyl (piperidyl), tetrahydrothiophenyl, piperidinyl, 4-piperidonyl, pyrrolidinyl, 2-pyrrolidonyl, tetrahydrofuranyl, tetrahydropyranyl, bis-tetrahydropyranyl, tetrahydroquinolinyl, tetrahydroisoquinolinyl, decahydroquinolinyl, octahydroisoquinolinyl, piperazinyl, quinuclidinyl, and morpholinyl. Heteroaryl and heterocycloalkyl groups can be unsubstituted or substituted.

"Substituted" as used herein and as applied to any of the above alkyl, aryl, cycloalkyl, heteroaryl, heterocyclyl, means that one or more hydrogen atoms are each independently replaced with a substituent. Typical substituents include, but are not limited to, -Cl, Br, F, alkyl, - OH, -OCH3, NH₂, -NHCH₃, -N(CH₃)₂, -CN, -NC(=O)CH₃, -C(=O)-, -C(=O)NH₂, and - C(=O)N(CH₃)₂. Wherever a group is described as "optionally substituted," that group can be substituted with one or more of the above substituents, independently selected for each occasion. In some embodiments, the substituent may be one or more methyl groups or one or more hydroxyl groups.

In some embodiments, the organic acid is an alkyl carboxylic acid. Non-limiting examples of alkyl carboxylic acids include formic acid, acetic acid, propionic acid, butyric acid, valeric acid, caproic acid, heptanoic acid, octanoic acid, nonanoic acid, decanoic acid, undecanoic acid, dodecanoic acid, stearic acid, oleic acid, linoleic acid, linolenic acid, and the like.

In some embodiments, the organic acid is an alkyl sulfonic acid. Non-limiting examples of alkyl sulfonic acids include propanesulfonic acid, heptanesulfonic acid, and octanesulfonic acid.

In some embodiments, the alkyl carboxylic or sulfonic acid is substituted with one or more hydroxyl groups. Non-limiting examples include glycolic acid, 4-hydroxybutyric acid, and lactic acid.

In some embodiments, an organic acid may include more than one carboxylic acid group or more than one sulfonic acid group (e.g., two, three, or more carboxylic acid groups). Non-limiting examples include oxalic acid, fumaric acid, maleic acid, and glutaric acid. In organic acids containing multiple carboxylic acids (e.g., from two to four carboxylic acid groups), one or more of the carboxylic acid groups may be esterified. Non-limiting examples include succinic acid monoethyl ester, monomethyl fumarate, monomethyl or dimethyl citrate, and the like.

In some embodiments, the organic acid may include more than one carboxylic acid group and one or more hydroxyl groups. Non-limiting examples of such acids include tartaric acid, citric acid, and the like.

In some embodiments, the organic acid is an aryl carboxylic acid or an aryl sulfonic acid. Non-limiting examples of aryl carboxylic and sulfonic acids include benzoic acid, toluic acids, salicylic acid, benzenesulfonic acid, and p-toluenesulfonic acid.

Further non-limiting examples of organic acids which may be useful in some embodiments include dibenzoyl-tartaric acid, 2,2-dichloroacetic acid, 2-hydroxyethanesulfonic acid, 2-oxoglutaric acid, 4-acetamidobenzoic acid, 4-aminosalicylic acid, adipic acid, ascorbic acid (L), aspartic acid (L), alpha-methylbutyric acid, camphoric acid (+), camphor-10-sulfonic acid (+), cinnamic acid, cyclamic acid, dodecylsulfuric acid, ethane-1,2-disulfonic acid, ethanesulfonic acid, furoic acid, galactaric acid, gentisic acid, glucoheptonic acid, gluconic acid, glucuronic acid, glutamic acid, glycerophosphoric acid, glycolic acid, hippuric acid, isobutyric acid, isovaleric acid, lactobionic acid, lauric acid, levulinic acid, malic acid, malonic acid, mandelic acid, methanesulfonic acid, naphthalene-1,5-disulfonic acid, naphthalene-2-sulfonic acid, oleic acid, palmitic acid, pamoic acid, phenylacetic acid, pyroglutamic acid, pyruvic acid, sebacic acid, stearic acid, and undecylenic acid. Examples of suitable acids include, but are not limited to, the list of organic acids in **Table 1.**

**Table 1. Non-limiting examples of suitable organic acids**

| **Acid Name** | **log(P)*** |
|---|---|
| benzoic acid | 1.9 |
| phenylacetic | 1.4 |
| p-toluic acid | 2.3 |
| ethyl benzoic acid | 2.9 |
| isopropyl benzoic acid | 3.5 |
| 4-phenylbutyric | 2.4 |
| 2-(4-Isobutylphenyl)propanoic acid | 3.5 |
| 2-napthoxyacetic acid | 2.5 |
| napthylacetic acid | 2.7 |
| heptanoic acid | 2.5 |
| octanoic acid | 3.05 |
| nonanoic acid | 3.5 |
| decanoic acid | 4.09 |
| 9-deceneoic acid | 3.3 |
| 2-deceneoic acid | 3.8 |
| 10-undecenoic acid | 3.9 |
| dodecandioic acid | 3.2 |
| dodecanoic acid | 4.6 |
| myristic acid | 5.3 |
| palmitic acid | 6.4 |
| stearic acid | 7.6 |
| cyclohexanebutanoic acid | 3.4 |
| 1-heptanesulfonic acid | 2.0 |
| 1-octanesulfonic acid | 2.5 |
| 1-nonanesulfonic acid | 3.1 |
| monooctyl succinate | 2.8 |
| tocopherol succinate | 10.2 |
| monomenthyl succinate | 3 |
| monomenthyl glutarate | 3.4 |
| norbixin ((2*E*,4*E*,6*E*,8*E*,10*E*,12*E*,14*E*,16*E*,18*E*)-4,8,13,17-tetramethylicosa-2,4,6,8,10,12,14,16,18-nonaenedioic | 7.2 |
| acid) | |
| bixin ((2E,4E,6E,8E,10E,12E,14E,16Z,18E)-20-methoxy-4,8,13,17-tetramethyl-20-oxoicosa-2,4,6,8,10,12,14,16,18-nonaenoic acid) | 7.5 |

| | |
|---|---|
| *Values obtained from PubChem or calculated | |

The selection of organic acid may further depend on additional properties in addition to consideration of the logP value. For example, an organic acid should be one recognized as safe for human consumption, and which has acceptable flavor, odor, volatility, stability, and the like. Determination of appropriate organic acids is within the purview of one of skill in the art.

In some embodiments, the organic acid is a mono ester of a dicarboxylic acid or a polycarboxylic acid. In some embodiments, the dicarboxylic acid is malonic acid, succinic acid, glutaric acid, adipic acid, fumaric acid, maleic acid, or a combination thereof. In some embodiments, the dicarboxylic acid is succinic acid, glutaric acid, fumaric acid, maleic acid, or a combination thereof. In some embodiments, the dicarboxylic acid is succinic acid, glutaric acid, or a combination thereof.

In some embodiments, the alcohol forming the mono ester of the dicarboxylic acid is a lipophilic alcohol. Examples of suitable lipophilic alcohols include, but are not limited to, octanol, menthol, and tocopherol. In some embodiments, the organic acid is an octyl mono ester of a dicarboxylic acid, such as monooctyl succinate, monooctyl fumarate, or the like. In some embodiments, the organic acid is a monomenthyl ester of a dicarboxylic acid. Certain menthyl esters may be desirable in oral compositions as described herein by virtue of the cooling sensation they may provide upon use of the product comprising the composition. In some embodiments, the organic acid is monomenthyl succinate, monomenthyl fumarate, monomenthyl glutarate, or a combination thereof. In some embodiments, the organic acid is a monotocopheryl ester of a dicarboxylic acid. Certain tocopheryl esters may be desirable in oral compositions as described herein by virtue of the antioxidant effects they may provide. In some embodiments, the organic acid is tocopheryl succinate, tocopheryl fumarate, tocopheryl glutarate, or a combination thereof.

In some embodiments, the organic acid is a carotenoid derivative having one or more carboxylic acids. Carotenoids are tetraterpenes, meaning that they are produced from 8 isoprene molecules and contain 40 carbon atoms. Accordingly, they are usually lipophilic due to the presence of long unsaturated aliphatic chains, and are generally yellow, orange, or red in color. Certain carotenoid derivatives can be advantageous in oral compositions by virtue of providing both ion pairing and serving as a colorant in the composition. In some embodiments, the organic acid is 2*E*,4*E*,6*E*,8*E*,10*E*,12*E*,14*E*,16*Z*,18*E*)-20-methoxy-4,8,13,17-tetramethyl-20-oxoicosa-2,4,6,8,10,12,14,16,18-nonaenoic acid (bixin) or an isomer thereof. Bixin is an apocarotenoid found in annatto seeds from the achiote tree (*Bixa orellana*) and is the naturally occurring pigment providing the reddish orange color to annatto. Bixin is soluble in fats and alcohols but insoluble in water, and is chemically unstable when isolated, converting via isomerization into the double bond isomer, *trans*-bixin (β-bixin), having the structure:

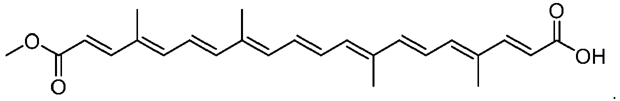

In some embodiments, the organic acid is (2*E*,4*E*,6*E*,8*E*,10*E*,12*E*,14*E*,16*E*,18*E*)-4,8,13,17-tetramethylicosa-2,4,6,8,10,12,14,16,18-nonaenedioic acid (norbixin), a water-soluble hydrolysis product of bixin having the structure:

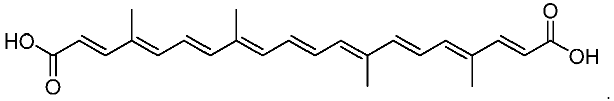

The selection of organic acid may further depend on additional properties in addition to or without consideration to the logP value. For example, an organic acid should be one recognized as safe for human consumption, and which has acceptable flavor, odor, volatility, stability, and the like. Determination of appropriate organic acids is within the purview of one of skill in the art.

In some embodiments, more than one organic acid may be present. For example, the composition may comprise two, or three, or four, or more organic acids. Accordingly, reference herein to "an organic acid" contemplates mixtures of two or more organic acids. The relative amounts of the multiple organic acids may vary. For example, a composition may comprise equal amounts of two, or three, or more organic acids, or may comprise different relative amounts. In this manner, it is possible to include certain organic acids (e.g., citric acid or myristic acid) which have a logP value outside the desired range, when combined with other organic acids to provide the desired average logP range for the combination. In some embodiments, it may be desirable to include organic acids in the composition which have logP values outside the desired range for purposes such as, but not limited to, providing desirable organoleptic properties, stability, as flavor components, and the like. Further, certain lipophilic organic acids have undesirable flavor and or aroma characteristics which would preclude their presence as the sole organic acid (e.g., in equimolar or greater quantities relative to nicotine). Without wishing to be bound by theory, it is believed that a combination of different organic acids may provide the desired ion pairing while the concentration of any single organic acid in the composition remains below the threshold which would be found objectionable from a sensory perspective.

For example, in some embodiments, the organic acid may comprise from about 1 to about 5 or more molar equivalents of benzoic acid relative to nicotine, combined with e.g., about 0.2 molar equivalents of octanoic acid or a salt thereof, and 0.2 molar equivalents of decanoic acid or a salt thereof.

In some embodiments, the organic acid is a combination of any two organic acids selected from the group consisting of benzoic acid, a toluic acid, benzenesulfonic acid, toluenesulfonic acid, hexanoic acid, heptanoic acid, decanoic acid, and octanoic acid. In some embodiments, the organic acid is a combination of benzoic acid, octanoic acid, and decanoic acid, or benzoic and octanoic acid. In some embodiments, the composition comprises citric acid in addition to one or more of benzoic acid, a toluic acid, benzenesulfonic acid, toluenesulfonic acid, hexanoic acid, heptanoic acid, decanoic acid, and octanoic acid.

In some embodiments, the oral composition comprises an alkali metal salt of an organic acid. For example, at least a portion of the organic acid may be present in the composition in the form of an alkali metal salt. Suitable alkali metal salts include lithium, sodium, and potassium. In some embodiments, the alkali metal is sodium or potassium. In some embodiments, the alkali metal is sodium. In some embodiments, the composition comprises an organic acid and a sodium salt of the organic acid.

In some embodiments, the oral composition comprises benzoic acid and sodium benzoate, octanoic acid and sodium octanoate, decanoic acid and sodium decanoate, or a combination thereof. In some embodiments, the composition comprises benzoic acid and sodium benzoate. In some embodiments, the composition comprises sodium benzoate.

In some embodiments, the ratio of the organic acid to the sodium salt (or other alkali metal salt) of the organic acid is from about 0.1 to about 10, such as from about 0.1, about 0.25, about 0.3, about 0.5, about 0.75, or about 1, to about 2, about 5, or about 10. For example, in some embodiments, both an organic acid and the sodium salt thereof are added to the other components of the composition, wherein the organic acid is added in excess of the sodium salt, in equimolar quantities with the sodium salt, or as a fraction of the sodium salt. One of skill in the art will recognize that the relative amounts will be determined by the desired pH of the composition, as well as the desired ionic strength. For example, the organic acid may be added in a quantity to provide a desired pH level of the composition, while the alkali metal (e.g., sodium) salt is added in a quantity to provide the desired extent of ion pairing. As one of skill in the art will understand, the quantity of organic acid (i.e., the protonated form) present in the composition, relative to the alkali metal salt or conjugate base form present in the composition, will vary according to the pH of the composition and the pKa of the organic acid, as well as according to the actual relative quantities initially added to the composition.

The amount of organic acid or an alkali metal salt thereof present in the oral composition, relative to the basic amine containing active ingredient (e.g., nicotine), may vary. Generally, as the concentration of the organic acid (or the conjugate base thereof) increases, the percent of nicotine that is ion paired with the organic acid increases. This typically increases the partitioning of the nicotine, in the form of an ion pair, into octanol versus water as measured by the logP (the log10 of the partitioning coefficient). In some embodiments, the composition comprises from about 0.05, about 0.1, about 1, about 1.5, about 2, or about 5, to about 10, about 15, or about 20 molar equivalents of the organic acid, the alkali metal salt thereof, or the combination thereof, relative to the nicotine component, calculated as free base nicotine.

In some embodiments, the oral composition comprises from about 2 to about 10, or from about 2 to about 5 molar equivalents of the organic acid, the alkali metal salt thereof, or the combination thereof, to nicotine, on a free-base nicotine basis. In some embodiments, the organic acid, the alkali metal salt thereof, or the combination thereof, is present in a molar ratio with the nicotine from about 2, about 3, about 4, or about 5, to about 6, about 7, about 8, about 9, or about 10. In embodiments wherein more than one organic acid, alkali metal salt thereof, or both, are present, it is to be understood that such molar ratios reflect the totality of the organic acids present.

In some embodiments the organic acid inclusion is sufficient to provide a pH of the oral composition from about 4.0 to about 9.5, such as from about 4.0 to about 9.0, or from about 4.0 to about 8.5, or from about 4.0 to about 8.0, or from about 4.5 to about 7.5, or from about 4.5 to about 7.0, or from about 5.5 to about 7.0, or from about 4.0 to about 5.5, or from about 7.0 to about 9.5. In some embodiments, the organic acid inclusion is sufficient to provide a composition pH of about 4.0, about 4.5, about 5.0, about 5.5, about 6.0, about 6.5, about 7.0, about 7.5, about 8.0, about 8.5, or about 9.0. In some embodiments, the organic acid inclusion is sufficient to provide a composition pH of from about 4.5 to about 6.5, for example, from about 4.5, about 5.0, or about 5.5, to about 6.0, or about 6.5. In some embodiments, the organic acid is provided in a quantity sufficient to provide a pH of the composition of from about 5.5 to about 6.5, for example, from about 5.5, about 5.6, about 5.7, about 5.8, about 5.9, or about 6.0, to about 6.1, about 6.2, about 6.3, about 6.4, or about 6.5. In some embodiments, a mineral acid (e.g., hydrochloric acid, sulfuric acid, phosphoric acid, or the like) is added to adjust the pH of the composition to the desired value.

In some embodiments, the organic acid is added as the free acid, either neat (i.e., native solid or liquid form) or as a solution in, e.g., water, to the other oral composition components. In some embodiments, the alkali metal salt of the organic acid is added, either neat or as a solution in, e.g., water, to the other oral composition components.

In some embodiments, the organic acid is added as the free acid, either neat (i.e., native solid or liquid form) or as a solution in, e.g., water, to the other composition components. In some embodiments, the alkali metal salt of the organic acid is added, either neat or as a solution in, e.g., water, to the other composition components. In some embodiments, the organic acid and the basic amine (e.g., nicotine) are combined to form a salt, either before addition to the composition, or the salt is formed within and is present in the composition as such. In some embodiments, the organic acid and basic amine (e.g., nicotine) are present as individual components in the composition and form an ion pair upon contact with moisture (e.g., saliva in the mouth of the consumer).

In some embodiments, the oral composition comprises nicotine benzoate and sodium benzoate, wherein at least a portion of the nicotine and benzoate ions present are in an ion paired form. In some embodiments, the composition comprises nicotine benzoate, sodium benzoate, and an organic acid, an alkali metal salt of an organic acid, or a combination thereof, the organic acid having a logP value from about 1 to about 12, wherein the organic acid is a monoester of a dicarboxylic acid or is a carotenoid derivative having one or more carboxylic acids.

In some embodiments, the oral composition further comprises a solubility enhancer to increase the solubility of one or more of the organic acid or salt thereof. Suitable solubility enhancers include, but are not limited to, humectants as described herein, such as glycerol or propylene glycol.

In particular embodiments, the oral composition comprises nicotine benzoate and sodium benzoate. In some embodiments, the sodium benzoate is present in a molar ratio to the nicotine benzoate in a range from about 1 to about 20, such as about 2, about 5, or about 10. In some embodiments, the oral composition further comprises nicotine polacrilex. In some embodiments, the total amount of nicotine present in the composition is provided in equal quantities from nicotine benzoate and nicotine polacrilex. In some embodiments, the oral composition includes only nicotine polacrilex as the nicotine source, and the composition optionally comprises an organic acid component such as sodium benzoate.

### Sensates

In some embodiments, the releasable component comprises a sensate. Sensates are compounds which chemically induce somatosensorial sensation through stimulation of the fifth cranial nerve (trigeminal nerve), in addition to or in place of aroma or taste nerves. Sensates include agents providing warming/heating, cooling, tingling, and numbing effects by interacting with (e.g., stimulating) the trigeminal nerve. For avoidance of doubt, such sensates are different and distinct from the flavoring agents disclosed herein.

Suitable sensates which provide to the user a warming effect include, but are not limited to, vanillyl alcohol n-butyl ether, vanillyl alcohol n-propylether, vanillyl alcohol isopropyl ether, vanillyl alcohol isobutyl ether, vanillyl alcohol n-aminoether, vanillyl alcohol isoamyl ether, vanillyl alcohol n-hexyle ther, vanillyl alcohol methyl ether, vanillyl alcohol ethyl ether, gingerol, shogaol, paradol, zingerone, capsaicin, dihydrocapsaicin, nordihydrocapsaicin, homocapsaicin, homodihydrocapsaicin, ethanol, isopropol alcohol, iso-amylalcohol, benzyl alcohol, glycerin, and combinations thereof. In some embodiments, the warming agent comprises vanillyl ethyl ether, capsaicin, or a combination thereof.

Suitable sensates which provide to the user a cooling effect include, but are not limited to, menthane, menthone, menthone ketals, menthone glycerol ketals, substituted p-menthanes, acyclic carboxamides, monomenthyl glutarate, substituted cyclohexanamides, substituted cyclohexane carboxamides, substituted ureas and sulfonamides, substituted menthanols, hydroxymethyl and hydroxymethyl derivatives of p-menthane, 2-mercapto-cyclo-decanone, hydroxycarboxylic acids with 2-6 carbon atoms, cyclohexanamides, menthyl acetate, menthyl salicylate, N,2,3-trimethyl-2-isopropyl butanamide (WS-23), N-ethyl-2,2-diisopropylbutanamide, N-ethyl-p-menthane-3-carboxamide (WS-3), ethyl ester of N-[[5-methyl-2-(1-methylethyl)cyclohexyl]carbonyl]glycine (WS-5), as well as the substantially pure ethyl ester of N-[[5-methyl-2-(1-methylethyl)cyclohexyl]carbonyl]glycine as disclosed in U.S. Pat. No. 7,189,760 to Erman, et al which is incorporated in its entirety herein by reference, isopulegol, menthyloxy propane diol, 3-(1-menthoxy)propane-1,2-diol, 3-(1-menthoxy)-2-methylpropane-1,2-diol, p-menthane-2,3-diol, p-menthane-3,8-diol, 6-isopropyl-9-methyl-1,4-dioxaspiro[4,5]decane-2-methanol, menthyl succinate and its alkaline earth metal salts, trimethylcyclohexanol, N-ethyl-2-isopropyl-5-methylcyclohexanecarboxamide, Japanese mint oil, peppermint oil, 3-(1-menthoxy)ethan-1-ol, 3-(1-menthoxy)propan-1-ol, 3-(1-menthoxy)butan-1-ol, 1-menthylacetic acid N-ethylamide, 1-menthyl-4-hydroxypentanoate, 1-menthyl-3-hydroxybutyrate, N,2,3-trimethyl-2-(1-methylethyl)-butanamide, n-ethyl-t-2-c-6 nonadienamide, N,N-dimethyl menthyl succinamide, substituted p-menthanes, substituted p-menthane-carboxamides, 2-isopropanyl-5-methylcyclohexanol; menthone glycerol ketals; 3-1-menthoxypropane-1,2-diol; and menthyl lactate; (from Haarman & Reimer, FEMA 3748, tradename FRESCOLAT.RTM. type ML), WS-30, WS-14, Eucalyptus extract (p-Mehtha-3,8-Diol), Menthol (its natural or synthetic derivatives), Menthol PG carbonate, Menthol EG carbonate, Menthol glyceryl ether, N-tertbutyl-p-menthane-3-carboxamide, P-menthane-3-carboxylic acid glycerol ester, Methyl-2-isopryl-bicyclo (2.2.1), Heptane-2-carboxamide; Menthol methyl ether, menthyl pyrrolidone carboxylate; 2,5-dimethyl-4-(1-pyrrolidinyl)-3(2H)-furanone; cyclic a-keto enamines, cyclotene derivatives such as cyclopentenes including 3-methyl-2-(1-pyrrolidinyl)-2-cyclopenten-1-one and 5-methyl-2-(1-pyrrolidinyl)-2-cyclopenten-1-one. Other compounds include the alpha-keto enamines disclosed in U.S. Pat. No. 6,592,884 to Hofmann et al., which is incorporated in its entirety herein. These and other suitable cooling agents are further described in the following U.S. patents, all of which are incorporated in their entirety by reference hereto: U.S. Pat. No. 4,230,688; 4,032,661; 4,459,425; 4,178,459; 4,296,255; 4,136,163; 5,009,893; 5,266,592; 5,698,181; 6,277,385; 6,627,233; 7,030,273. Still other suitable cooling agents are further described in the following U.S. Patent Applications, all of which are incorporated in their entirety by reference hereto: U.S. 2005/0222256; U.S. 2005/0265930. In some embodiments, the cooling agent comprises menthol, eucalyptus, mint, menthol, menthyl esters, eucolyptol, WS-3, WS-23, WS-5, Evercool^{™} 180 ((1R,2S,5R)-N-(4-(cyanomethyl)phenyl)menthylcarboxamide), Evercool^{™} 190 ((1R,2S,5R)-N-(2-(pyridin-2-yl)ethyl)menthylcarboxamide), or a combination thereof.

Suitable sensates which provide to the user a tingling, stinging, or numbing effect include, but are not limited to Jambu Oleoresin or para cress (Spilanthes sp.), in which the active ingredient is Spilanthol; Japanese pepper extract (Zanthoxylum peperitum), including the ingredients known as Saanshool-I, Saanshool-II and Sanshoamide; perillartine; 4-(1-menthoxymethyl)-2-phenyl-1,3-dioxolane; black pepper extract (piper nigrum), including the active ingredients chavicine and piperine; Echinacea extract; Northern Prickly Ash extract; trans-pellitorin, and red pepper oleoresin. In some embodiments, alkylamides extracted from materials such as jambu or sanshool may be included. Further examples of "tingling" type sensates include those disclosed in U.S. Pat. Nos. 6,780,443, 6,159,509, 5,545,424, and 5,407,665, each of which is incorporated by reference herein in its entirety.

### Water

The water content of the composition and the product comprising the composition, prior to use by a consumer of the product, may vary according to the desired properties. Typically, the oral product, prior to insertion into the mouth of the user, includes less than about 60 percent by weight of water, and generally is from about 1 to about 60% by weight of water, for example, from about 5 to about 55, about 10 to about 50, about 20 to about 45, or about 25 to about 40 percent water by weight, based on the total weight of the product. In some embodiments, the product is at least about 5% water, for example, from about 5 to about 60% water by weight, based on the total weight of the product.

### Salts

In some embodiments, the composition may further comprise a salt (e.g., alkali metal salts), typically employed in an amount sufficient to provide desired sensory attributes to the composition. Non-limiting examples of suitable salts include sodium chloride, potassium chloride, ammonium chloride, flour salt, and the like. When present, a representative amount of salt is about 0.5 percent by weight or more, about 1.0 percent by weight or more, or at about 1.5 percent by weight or more, but will typically make up about 10 percent or less of the total weight of the composition, or about 7.5 percent or less or about 5 percent or less (e.g., about 0.5 to about 5 percent by weight).

### Sweeteners

The composition typically further comprises one or more sweeteners. The sweeteners can be any sweetener or combination of sweeteners, in natural or artificial form, or as a combination of natural and artificial sweeteners. Examples of natural sweeteners include fructose, sucrose, glucose, maltose, mannose, galactose, lactose, stevia, and the like. Examples of artificial sweeteners include sucralose, isomaltulose, maltodextrin, saccharin, aspartame, acesulfame K, neotame and the like. In some embodiments, the sweetener comprises a sugar alcohol. Sugar alcohols are polyols derived from monosaccharides or disaccharides that have a partially or fully hydrogenated form. Sugar alcohols have, for example, about 4 to about 20 carbon atoms and include erythritol, arabitol, ribitol, isomalt, maltitol, dulcitol, iditol, mannitol, xylitol, lactitol, sorbitol, and combinations thereof (e.g., hydrogenated starch hydrolysates). When present, a representative amount of sweetener may make up from about 0.1 to about 20 percent or more of the of the mixture by weight, for example, from about 0.1 to about 1%, from about 1 to about 5%, from about 5 to about 10%, or from about 10 to about 20% of the composition on a weight basis.

### Binders

A binder (or combination of binders) may be employed in some embodiments, in amounts sufficient to provide the desired physical attributes and physical integrity to the composition. Typical binders can be organic or inorganic, or a combination thereof. Representative binders include povidone, sodium alginate, starch-based binders, pectin, carrageenan, pullulan, zein, and the like, %and combinations thereof. The amount of binder utilized in the mixture can vary, but is typically up to about 30 percent by weight, and some embodiments are characterized by a binder content of at least about 0.1 % by weight, such as about 1 to about 30% by weight or about 5 to about 10% by weight, based on the total weight of the mixture.

In some embodiments, the binder includes a gum, for example, a natural gum. As used herein, a natural gum refers to polysaccharide materials of natural origin that is useful as a thickening or gelling agent. Representative natural gums derived from plants, which are typically water soluble to some degree, include xanthan gum, guar gum, gum arabic, ghatti gum, gum tragacanth, karaya gum, locust bean gum, gellan gum, and combinations thereof. When present, natural gum binder materials are typically present in an amount of up to about 5% by weight, for example, from about 0.1, about 0.2, about 0.3, about 0.4, about 0.5, about 0.6, about 0.7, about 0.8, about 0.9, or about 1%, to about 2, about 3, about 4, or about 5% by weight, based on the total weight of the composition.

### Humectants

In some embodiments, one or more humectants may be employed in the composition. Examples of humectants include, but are not limited to, glycerin, propylene glycol, and the like. Where included, the humectant is typically provided in an amount sufficient to provide desired moisture attributes to the mixture. Further, in some instances, the humectant may impart desirable flow characteristics to the mixture for depositing in a mold. When present, a humectant will typically make up about 5% or less of the weight of the composition (e.g., from about 0.5 to about 5%). When present, a representative amount of humectant is about 0.1% to about 1% by weight, or about 1% to about 5% by weight, based on the total weight of the composition.

### Tobacco material

In some embodiments, the composition may include a tobacco material. The tobacco material can vary in species, type, and form. Generally, the tobacco material is obtained from for a harvested plant of the Nicotiana species. Example Nicotiana species include N. tabacum, N. rustica, N. alata, N. arentsii, N. excelsior, N. forgetiana, N. glauca, N. glutinosa, N. gossei, N. kawakamii, N. knightiana, N. langsdorffi, N. otophora, N. setchelli, N. sylvestris, N. tomentosa, N. tomentosiformis, N. undulata, N. x sanderae, N. africana, N. amplexicaulis, N. benavidesii, N. bonariensis, N. debneyi, N. longiflora, N. maritina, N. megalosiphon, N. occidentalis, N. paniculata, N. plumbaginifolia, N. raimondii, N. rosulata, N. simulans, N. stocktonii, N. suaveolens, N. umbratica, N. velutina, N. wigandioides, N. acaulis, N. acuminata, N. attenuata, N. benthamiana, N. cavicola, N. clevelandii, N. cordifolia, N. corymbosa, N. fragrans, N. goodspeedii, N. linearis, N. miersii, N. nudicaulis, N. obtusifolia, N. occidentalis subsp. Hersperis, N. pauciflora, N. petunioides, N. quadrivalvis, N. repanda, N. rotundifolia, N. solanifolia, and N. spegazzinii. Various representative other types of plants from the Nicotiana species are set forth in Goodspeed, The Genus Nicotiana, (Chonica Botanica) (1954); US Pat. Nos. 4,660,577 to Sensabaugh, Jr. et al.; 5,387,416 to White et al., 7,025,066 to Lawson et al.; 7,798,153 to Lawrence, Jr. and 8,186,360 to Marshall et al.; each of which is incorporated herein by reference. Descriptions of various types of tobaccos, growing practices and harvesting practices are set forth in Tobacco Production, Chemistry and Technology, Davis et al. (Eds.) (1999), which is incorporated herein by reference.

Nicotiana species from which suitable tobacco materials can be obtained can be derived using genetic-modification or crossbreeding techniques (e.g., tobacco plants can be genetically engineered or crossbred to increase or decrease production of components, characteristics or attributes). See, for example, the types of genetic modifications of plants set forth in US Pat. Nos. 5,539,093 to Fitzmaurice et al.; 5,668,295 to Wahab et al.; 5,705,624 to Fitzmaurice et al.; 5,844,119 to Weigl; 6,730,832 to Dominguez et al.; 7,173,170 to Liu et al.; 7,208,659 to Colliver et al. and 7,230,160 to Benning et al.; US Patent Appl. Pub. No. 2006/0236434 to Conkling et al.; and PCT WO2008/103935 to Nielsen et al. See, also, the types of tobaccos that are set forth in US Pat. Nos. 4,660,577 to Sensabaugh, Jr. et al.; 5,387,416 to White et al.; and 6,730,832 to Dominguez et al., each of which is incorporated herein by reference.

The Nicotiana species can, in some embodiments, be selected for the content of various compounds that are present therein. For example, plants can be selected on the basis that those plants produce relatively high quantities of one or more of the compounds desired to be isolated therefrom. In some embodiments, plants of the Nicotiana species (e.g., Galpao commun tobacco) are specifically grown for their abundance of leaf surface compounds. Tobacco plants can be grown in greenhouses, growth chambers, or outdoors in fields, or grown hydroponically.

Various parts or portions of the plant of the *Nicotiana* species can be included within a mixture as disclosed herein. For example, virtually all of the plant (e.g., the whole plant) can be harvested, and employed as such. Alternatively, various parts or pieces of the plant can be harvested or separated for further use after harvest. For example, the flower, leaves, stem, stalk, roots, seeds, and various combinations thereof, can be isolated for further use or treatment. In some embodiments, the tobacco material comprises tobacco leaf (lamina). The mixture disclosed herein can include processed tobacco parts or pieces, cured and aged tobacco in essentially natural lamina and/or stem form, a tobacco extract, extracted tobacco pulp (e.g., using water as a solvent), or a mixture of the foregoing (e.g., a mixture that combines extracted tobacco pulp with granulated cured and aged natural tobacco lamina).

In some embodiments, the tobacco material comprises solid tobacco material selected from the group consisting of lamina and stems. The tobacco that is used for the composition typically includes tobacco lamina, or a tobacco lamina and stem mixture (of which at least a portion is smoke treated). Portions of the tobaccos within the composition may have processed forms, such as processed tobacco stems (e.g., cut-rolled stems, cut-rolled-expanded stems or cut-puffed stems), or volume expanded tobacco (e.g., puffed tobacco, such as dry ice expanded tobacco (DIET)). See, for example, the tobacco expansion processes set forth in US Pat. Nos. 4,340,073 to de la Burde et al.; 5,259,403 to Guy et al.; and 5,908,032 to Poindexter, et al.; and 7,556,047 to Poindexter, et al., all of which are incorporated by reference. In addition, the composition optionally may incorporate tobacco that has been fermented. See, also, the types of tobacco processing techniques set forth in PCT WO2005/063060 to Atchley et al., which is incorporated herein by reference.

The tobacco material is typically used in a form that can be described as particulate (i.e., shredded, ground, granulated, or powder form). The manner by which the tobacco material is provided in a finely divided or powder type of form may vary. In some embodiments, plant parts or pieces are comminuted, ground or pulverized into a particulate form using equipment and techniques for grinding, milling, or the like. In some embodiments, the plant material is relatively dry in form during grinding or milling, using equipment such as hammer mills, cutter heads, air control mills, or the like. For example, tobacco parts or pieces may be ground or milled when the moisture content thereof is less than about 15 weight percent or less than about 5 weight percent. In some embodiments, the tobacco material is employed in the form of parts or pieces that have an average particle size between 1.4 millimeters and 250 microns. In some instances, the tobacco particles may be sized to pass through a screen mesh to obtain the particle size range required. If desired, air classification equipment may be used to ensure that small sized tobacco particles of the desired sizes, or range of sizes, may be collected. If desired, differently sized pieces of granulated tobacco may be mixed together.

The manner by which the tobacco is provided in a finely divided or powder type of form may vary. In some embodiments, tobacco parts or pieces are comminuted, ground or pulverized into a powder type of form using equipment and techniques for grinding, milling, or the like. In some embodiments, the tobacco is relatively dry in form during grinding or milling, using equipment such as hammer mills, cutter heads, air control mills, or the like. For example, tobacco parts or pieces may be ground or milled when the moisture content thereof is less than about 15 weight percent to less than about 5 weight percent. For example, the tobacco plant or portion thereof can be separated into individual parts or pieces (e.g., the leaves can be removed from the stems, and/or the stems and leaves can be removed from the stalk). The harvested plant or individual parts or pieces can be further subdivided into parts or pieces (e.g., the leaves can be shredded, cut, comminuted, pulverized, milled or ground into pieces or parts that can be characterized as filler-type pieces, granules, particulates or fine powders). The plant, or parts thereof, can be subjected to external forces or pressure (e.g., by being pressed or subjected to roll treatment). When carrying out such processing conditions, the plant or portion thereof can have a moisture content that approximates its natural moisture content (e.g., its moisture content immediately upon harvest), a moisture content achieved by adding moisture to the plant or portion thereof, or a moisture content that results from the drying of the plant or portion thereof. For example, powdered, pulverized, ground or milled pieces of plants or portions thereof can have moisture contents of less than about 25 weight percent, often less than about 20 weight percent, and frequently less than about 15 weight percent.

For the preparation of oral products, it is typical for a harvested plant of the Nicotiana species to be subjected to a curing process. The tobacco materials incorporated within the composition for inclusion within pouched products as disclosed herein are those that have been appropriately cured and/or aged. Descriptions of various types of curing processes for various types of tobaccos are set forth in Tobacco Production, Chemistry and Technology, Davis et al. (Eds.) (1999). Examples of techniques and conditions for curing flue-cured tobacco are set forth in Nestor et al., Beitrage Tabakforsch. Int., 20, 467-475 (2003) and U.S. Pat. No. 6,895,974 to Peele, which are incorporated herein by reference. Representative techniques and conditions for air curing tobacco are set forth in U.S. Pat. No. 7,650,892 to Groves et al.; Roton et al., Beitrage Tabakforsch. Int., 21, 305-320 (2005) and Staaf et al., Beitrage Tabakforsch. Int., 21, 321-330 (2005), which are incorporated herein by reference. Certain types of tobaccos can be subjected to alternative types of curing processes, such as fire curing or sun curing.

In some embodiments, tobacco materials that can be employed include flue-cured or Virginia (e.g., K326), burley, sun-cured (e.g., Indian Kurnool and Oriental tobaccos, including Katerini, Prelip, Komotini, Xanthi and Yambol tobaccos), Maryland, dark, dark-fired, dark air cured (e.g., Madole, Passanda, Cubano, Jatin and Bezuki tobaccos), light air cured (e.g., North Wisconsin and Galpao tobaccos), Indian air cured, Red Russian and Rustica tobaccos, as well as various other rare or specialty tobaccos and various blends of any of the foregoing tobaccos.

The tobacco material may also have a so-called "blended" form. For example, the tobacco material may include a mixture of parts or pieces of flue-cured, burley (e.g., Malawi burley tobacco) and Oriental tobaccos (e.g., as tobacco composed of, or derived from, tobacco lamina, or a mixture of tobacco lamina and tobacco stem). For example, a representative blend may incorporate about 30 to about 70 parts burley tobacco (e.g., lamina, or lamina and stem), and about 30 to about 70 parts flue cured tobacco (e.g., stem, lamina, or lamina and stem) on a dry weight basis. Other example tobacco blends incorporate about 75 parts flue-cured tobacco, about 15 parts burley tobacco, and about 10 parts Oriental tobacco; or about 65 parts flue-cured tobacco, about 25 parts burley tobacco, and about 10 parts Oriental tobacco; or about 65 parts flue-cured tobacco, about 10 parts burley tobacco, and about 25 parts Oriental tobacco; on a dry weight basis. Other example tobacco blends incorporate about 20 to about 30 parts Oriental tobacco and about 70 to about 80 parts flue-cured tobacco.

Tobacco materials used in the present disclosure can be subjected to, for example, fermentation, bleaching, and the like. If desired, the tobacco materials can be, for example, irradiated, pasteurized, or otherwise subjected to controlled heat treatment. Such treatment processes are detailed, for example, in US Pat. No. 8,061,362 to Mua et al., which is incorporated herein by reference. In some embodiments, tobacco materials can be treated with water and an additive capable of inhibiting reaction of asparagine to form acrylamide upon heating of the tobacco material (e.g., an additive selected from the group consisting of lysine, glycine, histidine, alanine, methionine, cysteine, glutamic acid, aspartic acid, proline, phenylalanine, valine, arginine, compositions incorporating di- and trivalent cations, asparaginase, certain non-reducing saccharides, certain reducing agents, phenolic compounds, certain compounds having at least one free thiol group or functionality, oxidizing agents, oxidation catalysts, natural plant extracts (e.g., rosemary extract), and combinations thereof. See, for example, the types of treatment processes described in US Pat. Pub. Nos. 8,434,496, 8,944,072, and 8,991,403 to Chen et al., which are all incorporated herein by reference. In some embodiments, this type of treatment is useful where the original tobacco material is subjected to heat in the processes previously described.

In some embodiments, the type of tobacco material is selected such that it is initially visually lighter in color than other tobacco materials to some degree (e.g., whitened or bleached). Tobacco pulp can be whitened in some embodiments according to any means known in the art, For example, bleached tobacco material produced by various whitening methods using various bleaching or oxidizing agents and oxidation catalysts can be used. Example oxidizing agents include peroxides (e.g., hydrogen peroxide), chlorite salts, chlorate salts, perchlorate salts, hypochlorite salts, ozone, ammonia, and combinations thereof. Example oxidation catalysts are titanium dioxide, manganese dioxide, and combinations thereof. Processes for treating tobacco with bleaching agents are discussed, for example, in US Patent Nos. 787,611 to Daniels, Jr.; 1,086,306 to Oelenheinz; 1,437,095 to Delling; 1,757,477 to Rosenhoch; 2,122,421 to Hawkinson; 2,148,147 to Baier; 2,170,107 to Baier; 2,274,649 to Baier; 2,770,239 to Prats et al.; 3,612,065 to Rosen; 3,851,653 to Rosen; 3,889,689 to Rosen; 3,943,945 to Rosen; 4,143,666 to Rainer; 4,194,514 to Campbell; 4,366,823, 4,366,824, and 4,388,933 to Rainer et al.; 4,641,667 to Schmekel et al.; and 5,713,376 to Berger; and PCT WO 96/31255 to Giolvas, all of which are incorporated herein by reference. Other whitening methods using reagents such as ozone and potassium permanganate can also be used. See, for example, US Patent No. 3,943,940 to Minami, which is incorporated herein by reference.

In some embodiments, the whitened tobacco material can have an ISO brightness of at least about 50%, at least about 60%, at least about 65%, at least about 70%, at least about 75%, or at least about 80%. In some embodiments, the whitened tobacco material can have an ISO brightness in the range of about 50% to about 90%, about 55% to about 75%, or about 60% to about 70%. ISO brightness can be measured according to ISO 3688:1999 or ISO 2470-1:2016.

In some embodiments, the whitened tobacco material can be characterized as lightened in color (e.g., "whitened") in comparison to an untreated tobacco material. White colors are often defined with reference to the International Commission on Illumination's (CIE's) chromaticity diagram. The whitened tobacco material can, in some embodiments, be characterized as closer on the chromaticity diagram to pure white than an untreated tobacco material.

In various embodiments, the tobacco material can be treated to extract a soluble component of the tobacco material therefrom. "Tobacco extract" as used herein refers to the isolated components of a tobacco material that are extracted from solid tobacco pulp by a solvent that is brought into contact with the tobacco material in an extraction process. While a tobacco extract may comprise nicotine, reference to a tobacco extract herein is distinct and different from nicotine, which may also be obtained, e.g., by extraction from tobacco material. In various embodiments, a tobacco material can be treated to extract soluble components of the tobacco material therefrom. Various extraction techniques of tobacco materials can be used to provide a tobacco extract and tobacco solid material. See, for example, the extraction processes described in US Pat. Appl. Pub. No. 2011/0247640 to Beeson et al., which is incorporated herein by reference. Other example techniques for extracting components of tobacco are described in US Pat. Nos. 4,144,895 to Fiore; 4,150,677 to Osborne, Jr. et al.; 4,267,847 to Reid; 4,289,147 to Wildman et al.; 4,351,346 to Brummer et al.; 4,359,059 to Brummer et al.; 4,506,682 to Muller; 4,589,428 to Keritsis; 4,605,016 to Soga et al.; 4,716,911 to Poulose et al.; 4,727,889 to Niven, Jr. et al.; 4,887,618 to Bernasek et al.; 4,941,484 to Clapp et al.; 4,967,771 to Fagg et al.; 4,986,286 to Roberts et al.; 5,005,593 to Fagg et al.; 5,018,540 to Grubbs et al.; 5,060,669 to White et al.; 5,065,775 to Fagg; 5,074,319 to White et al.; 5,099,862 to White et al.; 5,121,757 to White et al.; 5,131,414 to Fagg; 5,131,415 to Munoz et al.; 5,148,819 to Fagg; 5,197,494 to Kramer; 5,230,354 to Smith et al.; 5,234,008 to Fagg; 5,243,999 to Smith; 5,301,694 to Raymond et al.; 5,318,050 to Gonzalez-Parra et al.; 5,343,879 to Teague; 5,360,022 to Newton; 5,435,325 to Clapp et al.; 5,445,169 to Brinkley et al.; 6,131,584 to Lauterbach; 6,298,859 to Kierulff et al.; 6,772,767 to Mua et al.; and 7,337,782 to Thompson, all of which are incorporated by reference herein.

Typical inclusion ranges for tobacco materials can vary depending on the nature and type of the tobacco material, and the intended effect on the final composition, with an example range of up to about 30% by weight, based on total weight of the composition (e.g., about 0.1 to about 15% by weight). In some embodiments, the products of the disclosure can be characterized as completely free or substantially free of tobacco material (other than purified nicotine as an active ingredient). For example, some embodiments can be characterized as having less than 1% by weight, or less than 0.5% by weight, or less than 0.1% by weight of tobacco material, or 0% by weight of tobacco material. In some embodiments, the composition comprises tobacco. In some embodiments, the composition comprises up to about 5% of tobacco, for example, from about 0.1 to about 1%, or from about 1% to about 5% by weight of tobacco, based on the total weight of the composition. In some embodiments, the composition comprises a traditional tobacco or a white tobacco. In some embodiments, the tobacco is a white tobacco.

### Buffering agents

In some embodiments, the composition of the present disclosure can comprise pH adjusters or buffering agents. Examples of pH adjusters and buffering agents that can be used include, but are not limited to, metal hydroxides (e.g., alkali metal hydroxides such as sodium hydroxide and potassium hydroxide), and other alkali metal buffers such as metal carbonates (e.g., potassium carbonate or sodium carbonate), or metal bicarbonates such as sodium bicarbonate, and the like. Where present, the buffering agent is typically present in an amount less than about 5 percent based on the weight of the formulation, for example, from about 0.5% to about 5%, such as, e.g., from about 0.75% to about 4%, from about 0.75% to about 3%, or from about 1% to about 2% by weight, based on the total weight of the composition. Non-limiting examples of suitable buffers include alkali metals acetates, glycinates, phosphates, glycerophosphates, citrates, carbonates, hydrogen carbonates, borates, or mixtures thereof.

### Colorants

A colorant may be employed in amounts sufficient to provide the desired physical attributes to the composition. Natural or synthetic colorants, such as natural or synthetic dyes, food-grade colorants and pharmaceutical-grade colorants may be used. Examples of colorants include various dyes and pigments, such as caramel coloring and titanium dioxide. Natural colorants such as curcumin, beet juice extract, spirulina may be used. Also, a variety of synthetic pigments may be used. In some embodiments, the colorant is a lake dye, such as a red or blue aluminum lake dye. The amount of colorant utilized in the composition can vary, but when present is typically up to about 3% by weight, such as from about 0.1%, about 0.5%, or about 1%, to about 3% by weight, based on the total weight of the composition.

### Taste modifiers

In order to improve the organoleptic properties of a composition as disclosed herein, the composition may include one or more taste modifying agents ("taste modifiers") which may serve to mask, alter, block, or improve e.g., the flavor of an oral composition as described herein. Non-limiting examples of such taste modifiers include analgesic or anesthetic herbs, spices, and flavors which produce a perceived cooling (e.g., menthol, eucalyptus, mint), warming (e.g., cinnamon), or painful (e.g., capsaicin) sensation. Certain taste modifiers fall into more than one overlapping category.

In some embodiments, the taste modifier modifies one or more of bitter, sweet, salty, or sour tastes. In some embodiments, the taste modifier targets pain receptors. In some embodiments, the composition comprises an active ingredient having a bitter taste, and a taste modifier which masks or blocks the perception of the bitter taste. In some embodiments, the taste modifier is a substance which targets pain receptors (e.g., vanilloid receptors) in the user's mouth to mask e.g., a bitter taste of another component (e.g., an active ingredient). In some embodiments, the taste modifier is capsaicin.

In some embodiments, the taste modifier is the amino acid gamma-amino butyric acid (GABA), referenced herein above with respect to amino acids. Studies in mice suggest that GABA may serve function(s) in taste buds in addition to synaptic inhibition. See, e.g., Dvoryanchikov et al., J Neurosci. 2011 Apr 13;31(15):5782-91. Without wishing to be bound by theory, GABA may suppress the perception of certain tastes, such as bitterness.

In some embodiments, the taste modifier is adenosine monophosphate (AMP). AMP is a naturally occurring nucleotide substance which can block bitter food flavors or enhance sweetness. It does not directly alter the bitter flavor but may alter human perception of "bitter" by blocking the associated receptor.

In some embodiments, the taste modifier is lactisole. Lactisole is an antagonist of sweet taste receptors. Temporarily blocking sweetness receptors may accentuate e.g., savory notes.

When present, a representative amount of taste modifier is about 0.01% by weight or more, about 0.1% by weight or more, or about 1.0% by weight or more, but will typically make up less than about 10% by weight of the total weight of the composition, (e.g., from about 0.01%, about 0.05%, about 0.1%, or about 0.5%, to about 1%, about 5%, or about 10% by weight based on the total weight of the composition).

### Other additives

Other additives can be included in the disclosed composition. For example, the composition can be processed, blended, formulated, combined and/or mixed with other materials or ingredients. The additives can be artificial or can be obtained or derived from herbal or biological sources. Examples of types of additives include emulsifiers, oral care additives (e.g., thyme oil, eucalyptus oil, and zinc), preservatives (e.g., potassium sorbate and the like), antioxidants, disintegration aids, or combinations thereof. See, for example, those representative components, combination of components, relative amounts of those components, and manners and methods for employing those components, set forth in US Pat. No. 9,237,769 to Mua et al., US Pat. No. 7,861,728 to Holton, Jr. et al., U.S. Pat. App. Pub. No. 2010/0291245 to Gao et al., and U.S. Pat. App. Pub. No. 2007/0062549 to Holton, Jr. et al., each of which is incorporated herein by reference. These and other exemplary types of additives may include those described in, for example, previously incorporated by reference herein. Typical inclusion ranges for such additional additives can vary depending on the nature and function of the additive and the intended effect on the final composition, with an example range of up to about 10% by weight, based on total weight of the composition (e.g., about 0.1 to about 5% by weight).

The aforementioned additives can be employed together (e.g., as additive formulations) or separately (e.g., individual additive components can be added at different stages involved in the preparation of the final composition). Furthermore, the aforementioned types of additives may be encapsulated as provided in the final product or composition. Exemplary encapsulated additives are described, for example, in WO 2010/132444 A2 to Atchley, which has been previously incorporated by reference herein.

### Configured for Oral Use

Provided herein are compositions and products configured for oral use. The term "configured for oral use" as used herein means that the composition or product is provided in a form such that during use, saliva in the mouth of the user causes one or more of the components of the composition (e.g., flavoring agents and/or nicotine) to pass into the mouth of the user. In some embodiments, the composition or product is adapted to deliver components to a user through mucous membranes in the user's mouth and, in some instances, said component is an active ingredient (including, but not limited to, for example, nicotine) that can be absorbed through the mucous membranes in the mouth when the composition or product is used. In some embodiments, the component is a taste substance (i.e., a volatile flavor component).

Products configured for oral use as described herein may take various forms, including gels, pastilles, gums, lozenges, powders, and pouches. Certain products of the disclosure are in the form of solids. Certain products can exhibit, for example, one or more of the following characteristics: crispy, granular, chewy, syrupy, pasty, fluffy, smooth, and/or creamy. In some embodiments, the desired textural property can be selected from the group consisting of adhesiveness, cohesiveness, density, dryness, fracturability, graininess, gumminess, hardness, heaviness, moisture absorption, moisture release, mouthcoating, roughness, slipperiness, smoothness, viscosity, wetness, and combinations thereof.

The compositions of the present disclosure may be dissolvable. As used herein, the terms "dissolve," "dissolving," and "dissolvable" refer to compositions having aqueous-soluble components that interact with moisture in the oral cavity and enter into solution, thereby causing gradual consumption of the composition. According to one aspect, the dissolvable composition is capable of lasting in the user's mouth for a given period of time until it completely dissolves. Dissolution rates can vary over a wide range, from about 1 minute or less to about 60 minutes. For example, fast release compositions typically dissolve and/or release the active substance in about 2 minutes or less, often about 1 minute or less (e.g., about 50 seconds or less, about 40 seconds or less, about 30 seconds or less, or about 20 seconds or less). Dissolution can occur by any means, such as melting, mechanical disruption (e.g., chewing), enzymatic or other chemical degradation, or by disruption of the interaction between the components of the composition. In some embodiments, the products do not dissolve during the product's residence in the user's mouth.

In one embodiment, the composition of the present disclosure is disposed within a moisture-permeable container (e.g., a water-permeable pouch) to form a pouched oral product. Such pouched products are typically used by placing one pouch containing the composition in the mouth of a human subject/user. Generally, the pouch is placed somewhere in the oral cavity of the user, for example under the lips, in the same way as moist snuff products are generally used. The pouch typically is not chewed or swallowed. Exposure to saliva then causes some of the components of the composition therein (e.g., flavoring agents and/or nicotine) to pass through e.g., the water-permeable pouch and provide the user with flavor and satisfaction, and the user is not required to spit out any portion of the composition. After about 10 minutes to about 60 minutes, typically about 15 minutes to about 45 minutes, of use/enjoyment, substantial amounts of the composition have been ingested by the human subject, and the pouch may be removed from the mouth of the human subject for disposal.

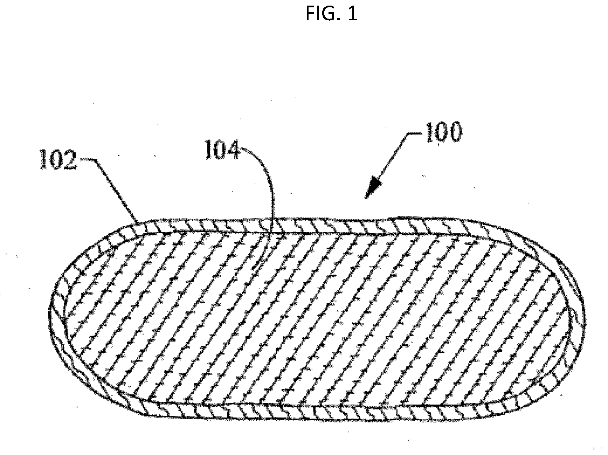

Accordingly, in some embodiments, the composition as disclosed herein and any other components noted above are combined within a moisture-permeable packet or pouch that acts as a container for use of the composition to provide a pouched product configured for oral use. Some embodiments of the disclosure will be described with reference to **FIG. 1** of the accompanying drawings, and these described embodiments involve snus-type products having an outer pouch and containing a composition as described herein. As explained in greater detail below, such embodiments are provided by way of example only, and the pouched products of the present disclosure can include composition in other forms. The composition/construction of such packets or pouches, such as the container pouch **102** in the embodiment illustrated in **FIG. 1****,** may be varied. Referring to **FIG. 1****,** there is shown a first embodiment of a pouched product **100.** The pouched product **100** includes a moisture-permeable container in the form of a pouch **102,** which contains a material **104** comprising a composition as described herein.

The pouch provides a liquid-permeable container of a type that may be considered to be similar in character to the mesh-like type of material that is used for the construction of a tea bag. Components of the composition readily diffuse through the pouch and into the mouth of the user. Non-limiting examples of suitable types of pouches are set forth in, for example, US Pat. No. 5,167,244 to Kjerstad, which is incorporated herein by reference. Pouches can be provided as individual pouches, or a plurality of pouches (e.g., 2, 4, 5, 10, 12, 15, 20, 25 or 30 pouches) can be connected or linked together (e.g., in an end-to-end manner) such that a single pouch or individual portion can be readily removed for use from a one-piece strand or matrix of pouches.

An example pouch may be manufactured from materials, and in such a manner, such that during use by the user, the pouch undergoes a controlled dispersion or dissolution. Such pouch materials may have the form of a mesh, screen, perforated paper, permeable fabric, or the like. For example, pouch material manufactured from a mesh-like form of rice paper, or perforated rice paper, may dissolve in the mouth of the user. As a result, the pouch and composition each may undergo complete dispersion within the mouth of the user during normal conditions of use, and hence the pouch and composition both may be ingested by the user. Other examples of pouch materials may be manufactured using water dispersible film forming materials (e.g., binding agents such as alginates, carboxymethylcellulose, xanthan gum, pullulan, and the like), as well as those materials in combination with materials such as ground cellulosics (e.g., fine particle size wood pulp). Example pouch materials, though water dispersible or dissolvable, may be designed and manufactured such that under conditions of normal use, a significant amount of the composition contents permeate through the pouch material prior to the time that the pouch undergoes loss of its physical integrity. If desired, flavoring ingredients, disintegration aids, and other desired components, may be incorporated within, or applied to, the pouch material.

The amount of material contained within each product unit, for example, a pouch, may vary. In some embodiments, the dry weight of the composition within each pouch is at least about 50 mg, for example, from about 50 mg to about 1 gram, from about 100 to 800 about mg, or from about 200 to about 700 mg. In some smaller embodiments, the dry weight of the composition within each pouch may be from about 100 to about 300 mg. For a larger embodiment, the dry weight of the material within each pouch may be from about 300 mg to about 700 mg. If desired, other components can be contained within each pouch. For example, at least one flavored strip, piece or sheet of flavored water dispersible or water-soluble material (e.g., a breath-freshening edible film type of material) may be disposed within each pouch along with or without at least one capsule. Such strips or sheets may be folded or crumpled in order to be readily incorporated within the pouch. See, for example, the types of materials and technologies set forth in US Pat. Nos. 6,887,307 to Scott et al. and 6,923,981 to Leung et al.; and The EFSA Journal (2004) 85, 1-32; which are incorporated herein by reference.

A pouched product as described herein can be packaged within any suitable inner packaging material and/or outer container. See also, for example, the various types of containers for smokeless types of products that are set forth in US Pat. Nos. 7,014,039 to Henson et al.; 7,537,110 to Kutsch et al.; 7,584,843 to Kutsch et al.; 8,397,945 to Gelardi et al., D592,956 to Thiellier; D594,154 to Patel et al.; and D625,178 to Bailey et al.; US Pat. Pub. Nos. 2008/0173317 to Robinson et al.; 2009/0014343 to Clark et al.; 2009/0014450 to Bjorkholm; 2009/0250360 to Bellamah et al.; 2009/0266837 to Gelardi et al.; 2009/0223989 to Gelardi; 2009/0230003 to Thiellier; 2010/0084424 to Gelardi; and 2010/0133140 to Bailey et al; 2010/0264157 to Bailey et al.; and 2011/0168712 to Bailey et al. which are incorporated herein by reference.

### Storage and storage period

Products of the present disclosure configured for oral use may be packaged and stored in any suitable packaging in much the same manner that conventional types of smokeless tobacco products are packaged and stored. For example, a plurality of packets or pouches may be contained in a cylindrical container. The storage period of the product after preparation may vary. As used herein, "storage period" refers to the period of time after the preparation of the disclosed product. In some embodiments, one or more of the characteristics of the products disclosed herein (e.g., retention of volatile flavor components) is exhibited over some or all of the storage period. In some embodiments, the storage period (i.e., the time period after preparation) is at least one day. In some embodiments, the storage period is from about about 1 day, about 2 days, or about 3 days, to about 1 week, or from about 1 week to about 2 weeks, from about 2 weeks to about 1 month, from about 1 month to about 2 months, from about 2 months to about 3 months, from about 3 months to about 4 months, or from about 4 months to about 5 months. In some embodiments, the storage period is any number of days between about 1 and about 150. In some embodiments, the storage period may be longer than 5 months, for example, about 6 months, about 7 months, about 8 months, about 9 months, about 10 months, about 11 months, or about 12 months.

In some embodiments, the product as disclosed herein has a concentration of one or more of the at least one volatile flavor components present, which is greater than a concentration of the same one or more volatile flavor components present in a control product which does not include the cellulose derivative, as determined by semi-quantitative Gas Chromatography-Mass Spectrometry, when measured at a time point over the disclosed storage period.

### Preparation of the composition

Further provided herein is a method of preparing a composition configured for oral use as described herein. The method generally comprises forming a premix by combining a cellulose derivative or other gelling agent, a flow aid, and a releasable component, each as described herein above, and mixing the premix with a particulate filler component. Accordingly, in one aspect is provided a method of preparing a composition configured for oral use, the method comprising:
i) combining a cellulose derivative or other gelling agent, a flow aid, and a releasable component selected from the group consisting of flavoring agents, active ingredients, sensates, and combinations thereof to form a premix in the form of a flowable gel; and
ii) mixing the premix with a particulate filler component and water to form the composition.

Each of the cellulose derivative, flow aid, releasable component, particulate filler component, and the overall composition are as described above. It has been found according to the present disclosure that the combination of the cellulose derivative, flow aid, and releasable component provides a free-flowing, gelled premix. In some embodiments, this premix exhibits high retention of the releasable material over time (i.e., during storage), while the method of preparing the composition is simple, cost-effective, and convenient to carry out.

It is noted that other processes may be utilized to prepare compositions comprising the components disclosed herein. For example, a dry blend of cellulose ether, flow aid, and particulate filler may be prepared and combined with the releasable component. Alternatively, water, the releasable component, and cellulose ether may be combined to form a sticky gel, which is then combined with the particulate filler. However, this method lacks the processing advantages of the free-flowing gelled premix. In another alternative method, the cellulose ether is hydrated with a portion of the total amount of water (alone or with a humectant, such as propylene glycol) to be used in the composition, and the resulting slurry mixed with the releasable component and the mixture added to the dry ingredients (e.g., particulate filler). Each of these alternatives are further described in reference Examples 1-4 below.

In some embodiments, the composition further comprises one or more salts, one or more sweeteners, one or more binding agents, one or more humectants, one or more gums, one or more active ingredients, a tobacco material, or combinations thereof, each as described herein above. In such embodiments, the method further comprises adding the additional component(s) to the particulate filler component, either before, concurrently with, or after the premix is added.

In some embodiments, mixing the premix with the particulate filler component further comprises adding one or more active ingredients. The active ingredient(s) may be the same or different from the active ingredient which may comprise or be the releasable component. In some embodiments, the one or more active ingredients are selected from the group consisting of a nicotine component, botanicals, stimulants, amino acids, vitamins, and cannabinoids.

The manner by which the various components of the composition are combined and/or mixed may vary. The overall composition may be relatively uniform in nature. The various components of the composition may be contacted, combined, or mixed together using any mixing technique or equipment known in the art. Any mixing method that brings the composition ingredients into intimate contact can be used, such as a mixing apparatus featuring an impeller or other structure capable of agitation. Examples of mixing equipment include casing drums, conditioning cylinders or drums, liquid spray apparatus, conical-type blenders, ribbon blenders, mixers available as FKM130, FKM600, FKM1200, FKM2000 and FKM3000 from Littleford Day, Inc., Plough Share types of mixer cylinders, Hobart mixers, and the like. See also, for example, the types of methodologies set forth in U.S. Pat. Nos. 4,148,325 to Solomon et al.; 6,510,855 to Korte et al.; and 6,834,654 to Williams, each of which is incorporated herein by reference. Manners and methods for formulating mixtures will be apparent to those skilled in the art. See, for example, the types of methodologies set forth in US Pat. No. 4,148,325 to Solomon et al.; US Pat. No. 6,510,855 to Korte et al.; and US Pat. No. 6,834,654 to Williams, US Pat. Nos. 4,725,440 to Ridgway et al., and 6,077,524 to Bolder et al., each of which is incorporated herein by reference.

In some embodiments, the composition is enclosed in a pouch to form a pouched product as described herein above. In some embodiments, the composition is in a free-flowing, particulate form. Accordingly, in some embodiments, the method further comprises enclosing the product in a pouch to form the pouched product.

Many modifications and other embodiments of the disclosure will come to mind to one skilled in the art to which this disclosure pertains having the benefit of the teachings presented in the foregoing description. Therefore, it is to be understood that the disclosure is not to be limited to the embodiments disclosed and that modifications and other embodiments are intended to be included within the scope of the appended claims. Although specific terms are employed herein, they are used in a generic and descriptive sense only and not for purposes of limitation.

### EXAMPLES

Aspects of the present disclosure are more fully illustrated by the following examples, which are set forth to illustrate certain aspects of the present disclosure and are not to be construed as limiting thereof.

### Example 1. Composition prepared by dry blending ingredients with hydroxypropylcellulose

A pouched product according to an embodiment of the present disclosure was prepared from a composition comprising nicotine as the active ingredient (6 mg), along with microcrystalline cellulose (MCC), hydroxypropyl cellulose (HPC), and additional components as disclosed herein (salt, sweeteners, humectant, buffer, and flavoring agent). The composition had the formulation provided in **Table 2.**

Microcrystalline cellulose and salt were weighed into a mixing bowl, and the required amount of hydroxypropyl cellulose was added followed by mixing to form a dry blend. Sodium bicarbonate, sweetener, propylene glycol, and water were added to the aqueous nicotine solution, followed by the flavoring agent. The resulting solution was added into the dry blend and mixed to form the composition. Portions of the composition (462 mg) were placed in fleece pouches and sealed, and water was added to provide a final moisture content of the product of 48%.

**Table 2. Composition ingredients**

| **Ingredient** | **% by weight of composition** |
|---|---|
| microcrystalline cellulose | 41.37 |
| Nicotine solution | 7.55 |
| water | 7.36 |
| hydroxypropyl cellulose | 3.00 |
| sodium chloride | 2.30 |
| sweetener | 2.1 |
| propylene glycol | 0.91 |
| sodium bicarbonate | 0.26 |
| Flavoring agent | 1.2 |

### Example 2. Composition prepared by pre-loading flavor and hydroxypropyl cellulose

A pouched product according to an embodiment of the present disclosure was prepared from a composition comprising nicotine as the active ingredient, along with microcrystalline cellulose (MCC), hydroxypropyl cellulose (HPC), and additional components as disclosed herein (salt, sweeteners, humectant, buffer, and flavoring agent). The composition had the same formulation as provided in **Table 2.**

Microcrystalline cellulose and salt were weighed into a mixing bowl, followed by mixing to form a dry blend. Sodium bicarbonate, sweetener, propylene glycol, and water were added to the aqueous nicotine solution. The resulting solution was added into the dry blend and mixed. The required amount of hydroxypropyl cellulose was measured out and the flavoring agent added to the HPC, followed by mixing to form a sticky gel. The gel was transferred to the composition and the composition blended to form the composition. Portions of the composition (462 mg) were placed in fleece pouches and sealed, and water was added to provide a final moisture content of the product of 48%.

### Example 3. Composition prepared by slurrying hydroxypropyl cellulose

A pouched product according to an embodiment of the present disclosure was prepared from a composition comprising nicotine as the active ingredient, along with microcrystalline cellulose (MCC), hydroxypropyl cellulose (HPC), and additional components as disclosed herein (salt, sweeteners, humectant, buffer, and flavoring agent). The composition had the formulation provided in **Table 3.**

Microcrystalline cellulose, sodium bicarbonate, sweetener, and salt were weighed into a mixing bowl, followed by mixing to form a dry blend. The required amount of water was heated to about 70°C, and the required amount of hydroxypropyl cellulose was added with mixing to form a slurry. The slurry was cooled to room temperature, and the flavoring agent added. The nicotine solution and propylene glycol were added to the dry blend, and the HPC slurry was added while mixing. The mixture was blended to form the composition. Portions of the composition (462 mg) were placed in fleece pouches and sealed, and water was added to provide a final moisture content of the product of 48%.

**Table 3. Composition ingredients**

| **Ingredient** | **% by weight of composition** |
|---|---|
| microcrystalline cellulose | 44.1 |
| Nicotine solution | 7.55 |
| water | 7.36 |
| hydroxypropyl cellulose | 0.25 |
| sodium chloride | 2.30 |
| sweetener | 2.1 |
| propylene glycol | 0.91 |
| sodium bicarbonate | 0.26 |
| Flavoring agent | 1.2 |

### Example 4. Composition prepared by combining propylene glycol and hydroxypropyl cellulose

A pouched product according to an embodiment of the present disclosure was prepared from a composition comprising nicotine as the active ingredient, along with microcrystalline cellulose (MCC), hydroxypropyl cellulose (HPC), and additional components as disclosed herein (salt, sweeteners, humectant, buffer, and flavoring agent). The composition had the formulation provided in **Table 4.**

Microcrystalline cellulose, sodium bicarbonate, sweetener, and salt were weighed into a mixing bowl, followed by mixing to form a dry blend. The water and aqueous nicotine solution were added and the mixture blended. The propylene glycol was measured into a container and the required amount of HPC added, followed by stirring until a solution was obtained. To the solution was added the flavoring agent. The solution was then added into the blend while mixing to form the composition. Portions of the composition (462 mg) were placed in fleece pouches and sealed, and water was added to provide a final moisture content of the product of 48%.

**Table 4. Composition ingredients**

| **Ingredient** | **% by weight of composition** |
|---|---|
| microcrystalline cellulose | 43.9 |
| Nicotine solution | 7.55 |
| water | 4.26 |
| hydroxypropyl cellulose | 0.5 |
| sodium chloride | 2.30 |
| sweetener | 2.1 |
| propylene glycol | 4 |
| sodium bicarbonate | 0.26 |
| Flavoring agent | 1.2 |

### Example 5. Composition prepared by pre-mixing silica and hydroxypropyl cellulose

A pouched product according to an embodiment of the present disclosure was prepared from a composition comprising nicotine as the active ingredient, along with microcrystalline cellulose (MCC), hydroxypropyl cellulose (HPC), and additional components as disclosed herein (salt, sweeteners, humectant, buffer, and flavoring agent). The composition had the formulation provided in **Table 5.**

Microcrystalline cellulose, and salt were weighed into a mixing bowl. The nicotine solution and water were mixed, and sodium bicarbonate, sweetener, and propylene glycol added to the solution, and the resulting mixture added to the dry blend. The HPC and silica were combined to form a dry blend to which was added the flavoring agent. The resulting HPC-silica pre-blend was added to the mixture, followed by mixing to form the composition. Portions of the composition (462 mg) were placed in fleece pouches and sealed, and water was added to provide a final moisture content of the product of 48%.

**Table 5. Composition ingredients**

| **Ingredient** | **% by weight of composition** |
|---|---|
| microcrystalline cellulose | 42.9 |
| Nicotine solution | 7.55 |
| water | 7.36 |
| hydroxypropyl cellulose | 0.5 |
| silica | 1 |
| sodium chloride | 2.30 |
| sweetener | 2.1 |
| propylene glycol | 0.91 |
| sodium bicarbonate | 0.26 |
| Flavoring agent | 1.2 |

### Example 6. Semi-quantitation of flavors and components thereof

Certain pouched products of the disclosure were evaluated for content of flavorant over time. The relative amounts of various flavors were quantitatively assessed using gas chromatography/mass spectrometry (GC-MS) with Single Ion Monitoring (SIM) chromatograms against a calibration curve. The instrument used for quantitation was an Agilent (Wilmington, DE, USA) 6890N/5973 GC-MS. The data analysis was done using MassHunter Quantitative Analysis 8.07.00. Detailed parameters are listed in **Table 6.**

Each sample was accurately weighed into a scintillation vial on an analytical balance for a target weight of 0.5 grams. Each sample was then diluted with 5 mL isopropanol (containing 5.9 µg/mL d⁷-quinoline as the internal standard) and placed on an orbital shaker for 3 hours at 200 RPM. After shaking, each sample was filtered through a 0.45µm PVDF filter and transferred to a GC sample vial for analysis. Each sample was prepared in duplicate and analyzed by GC-MS

Each compound was semi-quantitated using the amount of internal standard divided by the internal standard peak area as a conversion factor (Compound Peak Area X µg Internal Standard/Internal Standard Area = µg Compound). It should be noted that relative extraction efficiencies and relative response factors were not taken into consideration.

**Table 6. GC-MS Operating Conditions**

| **Parameter** | **Setting** | **Parameter** | **Setting** |
|---|---|---|---|
| **GC Parameters (Agilent 7890B)** | | **Oven Program** | |
| Column Phase | DB-WAXETR | Initial Temperature | 37 °C |
| Length | 30 m | Initial Time | 2 min |
| Internal Diameter | 0.25 mm | Rate 1 | 2.5 °C/min |
| Film Thickness | 0.25 pm | Final Temperature | 230 °C |
| Flow Mode | Constant Flow | Final Time | 25.8 min |
| Flow Rate | 1.5 mL/min | Run Time | 105 min |
| Inlet Mode | Splitless | | |
| Purge Flow | 50 mL/min | | |
| Purge Time | 0.75 min | | |
| Gas Saver | On | | |
| Gas Saver Flow | 20 mL/min | | |
| Gas Saver Time | 3 min | | |
| Gas Type | Helium | | |
| Inlet Temperature | 250 °C | | |
| Injection Volume | 1 pl | | |

| **MS Parameters (Agilent 5977A)** | | | |
|---|---|---|---|
| Solvent Delay | 7 min | MS acquisition mode | SCAN |
| Transfer Line | 250 °C | Mass range | 15-550 amu |
| MS Source Temperature | 230 °C | Threshold | 150 |
| MS Quad Temperature | 150 °C | Sampling Rate | 2 |

Pouched product samples from Example 1 (control) were analyzed as described above. The results of the semi-quantitative analysis for several flavor components after storage of the pouches for various periods of time are provided in **Table 7.**

**Table 7. Representative flavorant component concentrations for control pouch of Example 1**

| **Component** | **Storage Period, Months** | |
|---|---|---|
| | **0** | **3** |
| menthol (µg/g) | 518 | 334.6 |
| carvone (µg/g) | 445.7 | 247.1 |
| ethyl heptanoate (µg/g) | 2.1 | 0 |
| beta ionone (µg/g) | 7.9 | 5.7 |

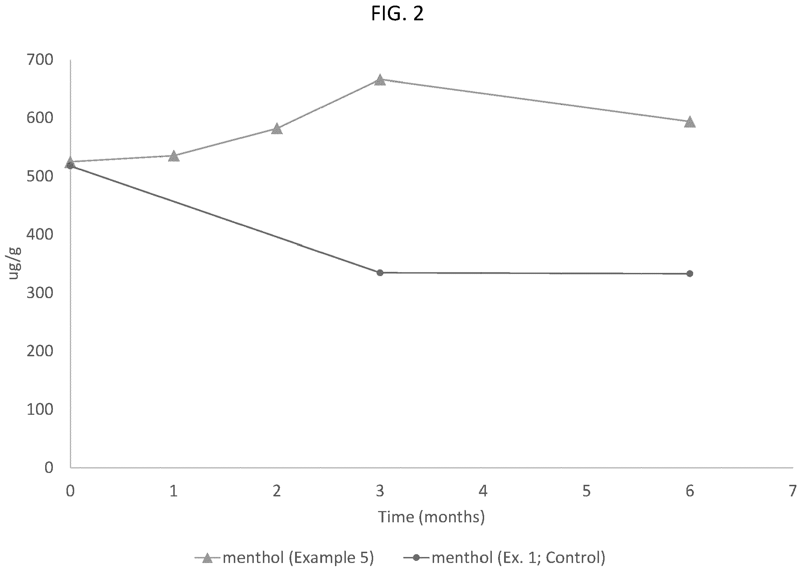

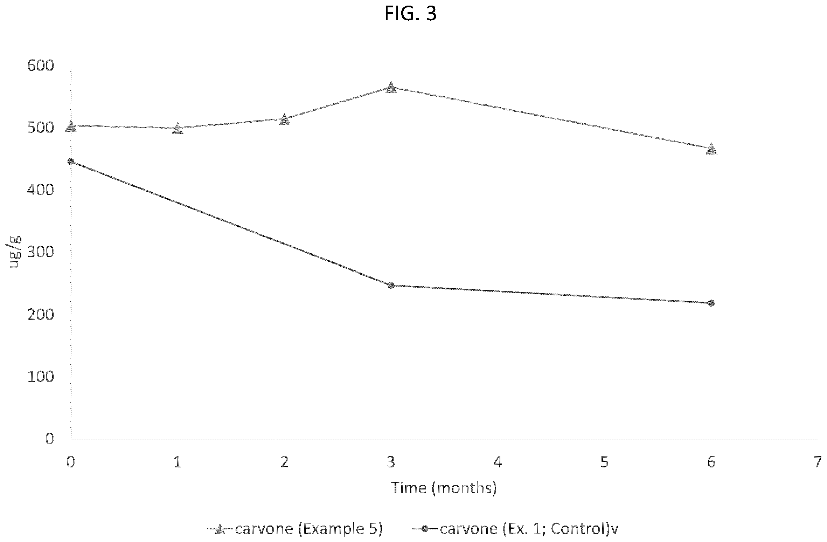

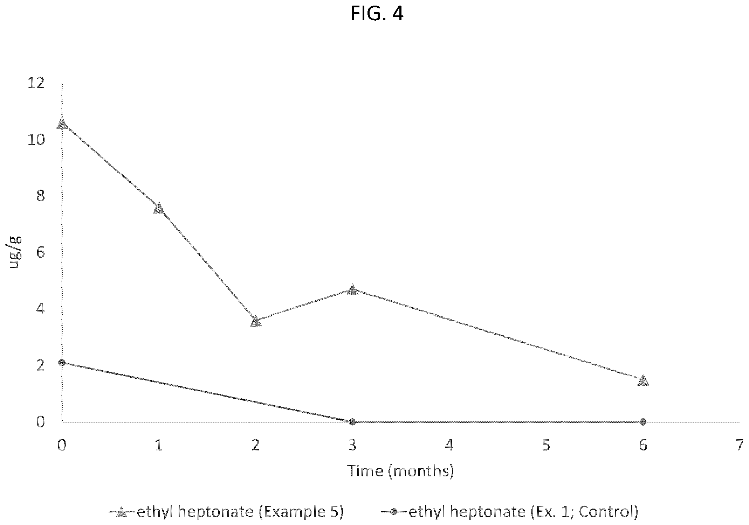

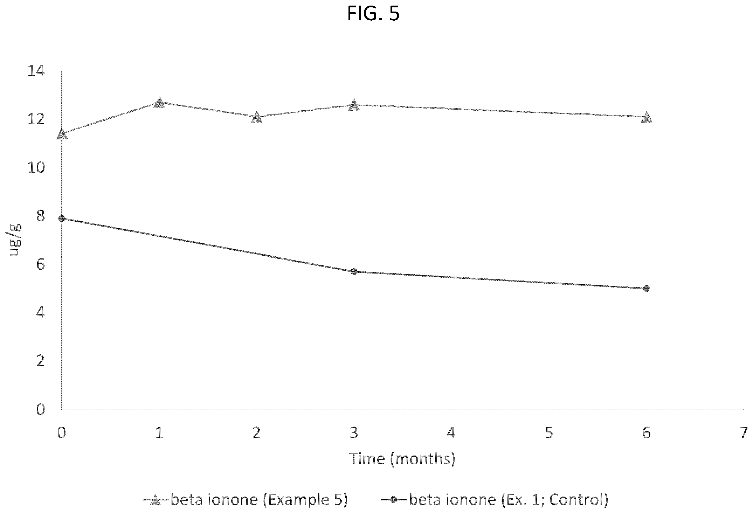

Pouched product samples from Example 5 were analyzed as described above. The results of the semi-quantitative analysis for several flavor components after storage of the pouches for various periods of time are provided in **Table 8.** With reference to **Table 7** and **Table 8,** the concentrations of each of the four flavorant components analyzed were greater in the pouched product of Example 5 (prepared according to method of the present disclosure) relative to the control and remained higher over 3 months of storage. As shown in **Table 9,** at time zero, the percent difference in the total volatile flavor components for the product of Example 5 relative to the control was approximately 16% (i.e., the pouch of Example 5 had 16% more flavorant content than the control pouch when first prepared). The same results extended out to 6 months of storage. Plots of concentration of each of the four flavor components (menthol, carvone, ethyl heptanoate, and beta ionone) over time out to 6 months are provided in **FIG. 2****,** **3****,** **4****,** and **5****,** respectively.

**Table 8. Representative flavorant component concentrations for pouch of Example 5**

| **Component** | **Storage Period, Months** | | | |
|---|---|---|---|---|
| | **0** | **1** | **2** | **3** |
| menthol (µg/g) | 524.7 | 535.2 | 582.1 | 666.2 |
| carvone (µg/g) | 503.5 | 499.7 | 514.4 | 565.4 |
| ethyl heptanoate (µg/g) | 10.6 | 7.6 | 3.6 | 4.7 |
| beta ionone (µg/g) | 11.4 | 12.7 | 12.1 | 12.6 |

**Table 9. Percent difference in volatile flavorants**

| **Comparison** | **Percent Difference** |
|---|---|
| | **(T=0)** |
| Example 5 vs Control (Example 1) | 15.77 |

### Example 7. Optimization of HPC/silica ratio

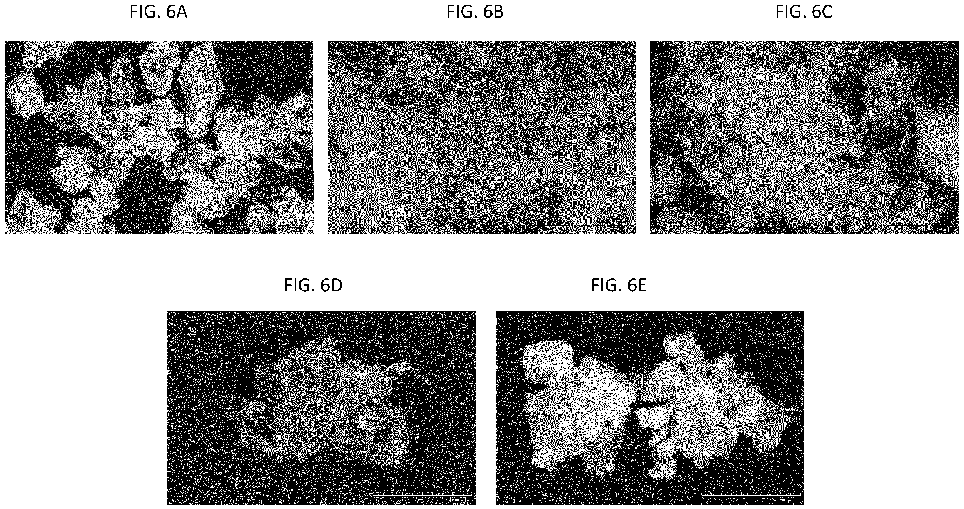

The effect of varying amounts of silica relative to HPC were evaluated by preparing aggregate components including a flavorant, HPC, and varying amounts of silica according to the formulations in **Table 10.** The samples were each prepared using 10 g of flavorant and 10 g of HPC. The HPC and silica were combined to form a dry blend to which was added the flavoring agent. For Example 7A, the volume of the aggregate component was high due to the low density and correspondingly higher volume for silica, but the aggregate component exhibited adequate flowability and moisture retention. For Example 7B, a little tackiness was initially observed, but after mixing, the aggregate component was flowable with no sticking. For Example 7C, the aggregate component was dry and flowable with minimal sticking observed during processing. Scanning electron microscopy images of HPC alone, silica alone, HPC and silica mixed at a weight ratio of 1:0.25 (without flavorant), and the aggregates of Examples 7C and 7B are provided as **FIGs. 6A-6E****,** respectively.

**Table 10. Aggregate component composition**

| **Example #** | **Flavorant (g)** | **HPC (g)** | **Silica relative to HPC** |
|---|---|---|---|
| **7A** | 10 | 10 | 0.5 |
| **7B** | 10 | 10 | 0.25 |
| **7C** | 10 | 10 | 0.125 |

## Claims

1. A composition configured for oral use, the composition comprising a particulate filler component and a free-flowing aggregate component comprising:
a gelling agent;
a flow aid; and
a releasable component selected from the group consisting of flavoring agents, active ingredients, sensates, and combinations thereof,
optionally wherein the composition is enclosed in a pouch to form a pouched product.

2. The composition of claim 1, wherein the gelling agent is an alginate or a cellulose derivative, such as a cellulose ether, optionally wherein the cellulose ether is one or more of methylcellulose, ethylcellulose, hydroxyethyl cellulose, hydroxypropyl cellulose (HPC), hydroxypropylmethyl cellulose (HPMC), or carboxymethyl cellulose (CMC), and/or wherein the gelling agent is present in an amount of from about 0.1 to about 3% by weight, based on the total weight of the composition.

3. The composition of claim 1 or 2, comprising from about 0.1 to about 3% by weight of the flow aid, based on the total weight of the composition.

4. The composition of any one of claims 1 to 3, wherein the flow aid is selected from the group consisting of silica, stearic acid, stearate salts, talc, sodium stearyl fumarate, polyethylene glycol, and combinations thereof.

5. The composition of any one of claims 1 to 4, wherein a ratio by weight of gelling agent to flow aid is about 1:0.125 or lower, such as about 1:0.125 to about 1:1 or about 1:0.125 to about 1:0.5.

6. The composition of any one of claims 1 to 5, wherein the gelling agent is hydroxypropyl cellulose (HPC) and the flow aid is silica.

7. The composition of any one of claims 1 to 6, wherein the particulate filler component comprises a cellulose material, a starch, or both, such as microcrystalline cellulose.

8. The composition of any one of claims 1 to 7, wherein the releasable component comprises a flavoring agent comprising one or more aldehydes, ketones, esters, terpenes, terpenoids, or a combination thereof, optionally wherein the flavoring agent comprises one or more alkyl esters comprising a Ci-Cs alkanol and a C₂-C₈ alkane carboxylic acid, and optionally wherein the one or more alkyl esters comprise isoamyl acetate, ethyl hexanoate, ethyl heptanoate, allyl hexanoate, or a combination thereof.

9. The composition of any one of claims 1 to 8, comprising:
from about 0.1 to about 3% by weight of hydroxypropylcellulose (HPC);
from about 0.1 to about 3% by weight of silica;
from about 10 to about 60% by weight of microcrystalline cellulose; and
from about 1 to about 60% by weight of water, based on the total weight of the composition.

10. The composition of any one of claims 1 to 9, further comprising from about 0.001 to about 10% by weight of a nicotine component, calculated as the free base and based on the total weight of the composition.

11. A method of preparing a composition configured for oral use, the method comprising:
i) combining a gelling agent, a flow aid, and a releasable component selected from the group consisting of flavoring agents, active ingredients, sensates, and combinations thereof to form a premix in the form of a free-flowing aggregate; and
ii) mixing the premix with a particulate filler component and water to form the composition.

12. The method of claim 11, wherein the gelling agent is an alginate or a cellulose derivative, such as a cellulose ether, optionally wherein the cellulose ether is one or more of methylcellulose, ethylcellulose, hydroxyethyl cellulose, hydroxypropyl cellulose (HPC), hydroxypropylmethyl cellulose (HPMC), or carboxymethyl cellulose (CMC), and/or wherein the flow aid is selected from the group consisting of silica, stearic acid, stearate salts, talc, sodium stearyl fumarate, polyethylene glycol, and combinations thereof.

13. The method of claim 11 or claim 12, wherein the releasable component comprises a flavoring agent comprising one or more aldehydes, ketones, esters, terpenes, terpenoids, or a combination thereof, optionally wherein the flavoring agent comprises one or more alkyl esters comprising a Ci-Cs alkanol and a C₂-C₈ alkane carboxylic acid, and optionally wherein the one or more alkyl esters comprise isoamyl acetate, ethyl hexanoate, ethyl heptanoate, allyl hexanoate, or a combination thereof.

14. The method of any one of claims 11 to 13, wherein the particulate filler component comprises a cellulose material, a starch, or both, such as microcrystalline cellulose.

15. The method of any one of claims 11 to 14, further comprising enclosing the composition in a pouch to form a pouched product.
